(19) Europäisches Patentamt
European Patent Office
Office européen des brevets

(11) Veröffentlichungsnummer: **0 029 136**
**B1**

(12) # EUROPÄISCHE PATENTSCHRIFT

(45) Veröffentlichungstag der Patentschrift: **09.11.83**

(51) Int. Cl.³: **C 09 B 26/02,** C 09 B 26/04, C 09 B 23/16, D 06 P 1/42, D 01 F 1/06, C 09 D 11/00

(21) Anmeldenummer: **80106565.7**

(22) Anmeldetag: **25.10.80**

(54) **Quartäre und basische Azamethinverbindungen, Verfahren zu ihrer Herstellung und ihre Verwendung als Farbmittel.**

(30) Priorität: **08.11.79 DE 2945028**

(43) Veröffentlichungstag der Anmeldung: **27.05.81 Patentblatt 81/21**

(45) Bekanntmachung des Hinweises auf die Patenterteilung: **09.11.83 Patentblatt 83/45**

(84) Benannte Vertragsstaaten: **BE CH DE FR GB IT LI**

(56) Entgegenhaltungen:
**DE - A - 2 502 024**
**DE - A - 2 503 098**
**FR - A - 2 359 181**
**GB - A - 1 257 652**
**GB - A - 2 002 799**

(73) Patentinhaber: **HOECHST AKTIENGESELLSCHAFT, Postfach 80 03 20, D-6230 Frankfurt am Main 80 (DE)**

(72) Erfinder: **Mohr, Reinhard, Dr., Rohrstrasse 34, D-6050 Offenbach/Main (DE)**
Erfinder: **Hähnke, Manfred, Dr., Behringstrasse 13, D-6233 Kelkheim (Taunus) (DE)**

**EP 0 029 136 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Quartäre und basische Azamethinverbindungen, Verfahren zu ihrer Herstellung und ihre Verwendung als Farbmittel

Die Erfindung liegt auf dem technischen Gebiet der basischen und kationischen Azamethinfarbstoffe.

Aus den deutschen Offenlegungsschriften 2 502 024, 2 503 098 und 2 630 233 sowie aus der britischen Patentanmeldungs-Veröffentlichung Nr. 2 002 799 A und der französischen Patentanmeldungs-Veröffentlichung Nr. 2 359 181 sind Azamethinfarbstoffe bekannt, die im Molekül die »Fischer-Base« und eine alkoxy- oder aryloxy-substituierte Phenylamino-Komponente aufweisen. Des weiteren sind aus der britischen Patentschrift 1 257 652 Azamethinfarbstoffe bekannt, die ebenso aus der Fischer-Base aufgebaut sind, jedoch eine Phenylamino-Komponente mit völlig anderer Struktur enthalten; diese Phenylamino-Komponente leitet sich von einem Phenylendiamin ab, dessen zweite Aminogruppe durch den Rest einer Alkylcarbonsäure amidiert ist, wobei der Alkylrest dieser Alkylcarbonsäure eine quartäre Ammoniumgruppe — als zweite quartäre Gruppe neben der quartären Fischer-Base — enthält. Die genannten, bekannten Azamethinfarbstoffe eignen sich zum Färben von Polyacrylnitrilfasermaterialien.

Mit der vorliegenden Erfindung wurden nunmehr neue wertvolle und vorteilhafte, dibasische Azamethinverbindungen der allgemeinen Formel (1)

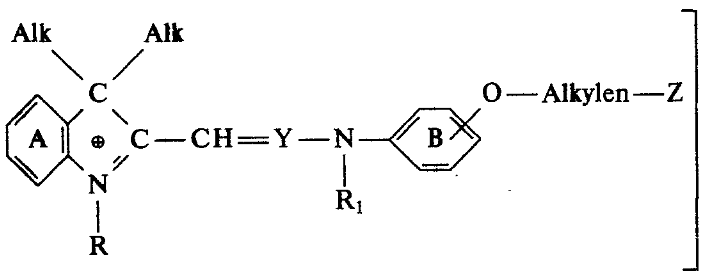

$\cdot\ n\ X^{\ominus}$ (1)

gefunden. In der Formel (1) bedeuten:

R ist Alkylgruppe von 1 bis 4 C-Atomen, die substituiert sein kann, beispielsweise durch eine Carbamoylgruppe ($-CONH_2$), eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;

Alk ist eine Alkylgruppe von 1 bis 4 C-Atomen, wobei beide gleich oder verschieden voneinander sein können;

Y ist der Methinrest (CH) oder ein Stickstoffatom;

$R_1$ ist ein Wasserstoffatom oder eine Alkylgruppe von 1 bis 4 C-Atomen, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;

Alkylen ist eine geradkettige oder verzweigte Alkylengruppe von 2 bis 6 C-Atomen;

Z ist eine Gruppe der Formel (2a) oder (2b)

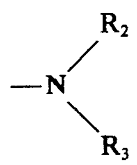 (2a)

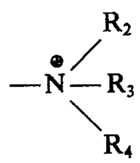 (2b)

in welchen

$R_2$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyangruppe oder Phenylgruppe,

$R_3$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe, oder der Phenylrest ist, der durch 1 oder 2 Substituenten aus der Gruppe Chlor, Alkyl von 1 bis 4 C-Atomen, Alkoxy von 1 bis 4 C-Atomen, Nitro, Carbalkoxy mit 1 bis 4 C-Atomen im Alkylrest und Carbamoyl substituiert sein kann, und

$R_4$ ein Wasserstoffatom oder eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe,

oder in welchen

$R_2$ und $R_3$ zusammen mit dem Stickstoffatom einen fünf-, sechs- oder siebengliedrigen heterocyclischen Rest bilden, der noch als weiteres Heteroatom ein Stickstoff-, Sauerstoff- oder

Schwefelatom enthalten kann, wie beispielsweise der Piperidin-, Piperazin- oder Morpholinring, oder

$R_2$ und $R_3$ oder $R_2$, $R_3$ und $R_4$ zusammen mit dem positiv geladenen Stickstoffatom einen fünf-, sechs- oder siebengliedrigen heterocyclischen Rest bilden, der noch als weiteres Heteroatom ein Stickstoff-, Sauerstoff- oder Schwefelatom enthalten kann, wie beispielsweise den Piperidinium-, Morpholinium-, Piperazinium-, 4-N-Methylpiperazinium- oder Pyridiniumrest, wobei $R_4$ entweder Teil des heterocyclischen Restes oder ein Wasserstoffatom oder die genannte Alkylgruppe sein kann;

der Benzolkern A kann durch 1 oder 2, vorzugsweise einen, Substituenten aus der Gruppe Halogen, wie Chlor und Brom, Nitro, Cyan, Sulfamoyl, Alkyl von 1 bis 4 C-Atomen, Alkoxy von 1 bis 4 C-Atomen und Carbalkoxy mit 1 bis 4 C-Atomen im Alkylrest substituiert sein;

der Benzolkern B kann durch 1 oder 2, vorzugsweise einen, Substituenten aus der Gruppe Halogen, wie Chlor, Nitro, Alkyl von 1 bis 4 C-Atomen, Alkoxy von 1 bis 4 C-Atomen und Carbalkoxy mit 1 bis 4 C-Atomen im Alkylrest substituiert sein;

n ist die Zahl 1 oder 2;

$X^{(-)}$ ist das Äquivalent eines farblosen Anions.

Die Formelreste R, $R_1$, $R_2$, $R_3$, $R_4$ und Alk, ebenso die Substituenten von A und B, können zueinander gleiche oder voneinander verschiedene Bedeutungen haben. Bevorzugt hat $R_4$ die gleiche Bedeutung wie $R_1$.

Die oben erwähnten Alkylgruppen sind vorzugsweise Methyl- und Äthylgruppen, die Alkoxygruppen vorzugsweise Methoxy- und Äthoxygruppen; Carbalkoxygruppen sind vorzugsweise Carbomethoxy- und Carbäthoxygruppen, Alkanoyloxygruppen vorzugsweise die Acetyloxygruppe.

Die vorliegende Erfindung betrifft ebenfalls die entsprechenden Verbindungen in Form der Basen gemäß der allgemeinen Formel (1A)

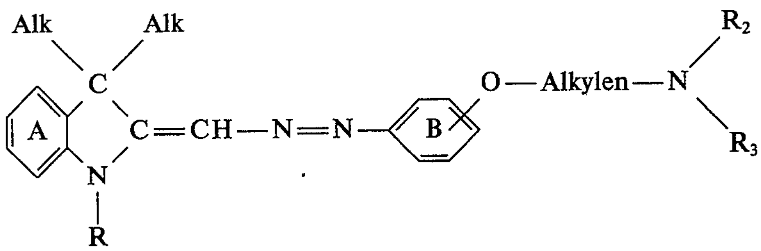

(1 A)

sowie deren Salze der Formel (1 B)

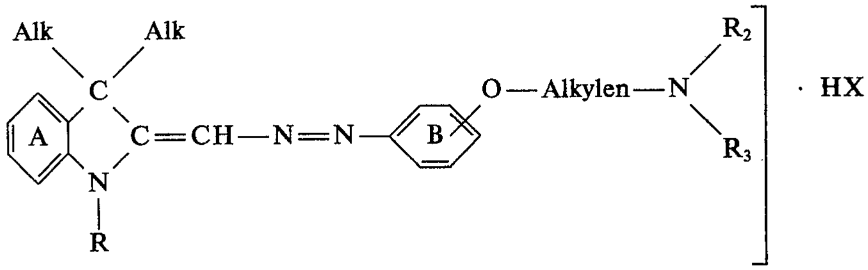

(1B)

in welchen R, Alk, Alkylen, $R_2$ und $R_3$ und die Benzolkerne A und B die obengenannten Bedeutungen haben und HX eine anorganische oder organische Säure, beispielsweise die Schwefelsäure, Phosphorsäure, Salzsäure, Essigsäure oder Tetrafluorborwasserstoffsäure ist.

Die vorliegende Erfindung betrifft weiterhin Verfahren zur Herstellung der obengenannten und definierten kationischen und basischen Verbindungen der allgemeinen Formeln (1).

Verbindungen der allgemeinen Formel (1), in welchen der Formelrest Y für den oben erwähnten Methinrest steht, lassen sich erfindungsgemäß herstellen, indem man eine Aldehydverbindung der allgemeinen Formel (3)

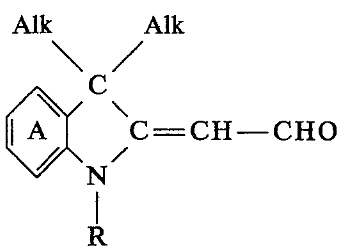

(3)

in welcher R, Alk und A die obengenannten Bedeutungen haben, mit einem Amin der allgemeinen Formel (4)

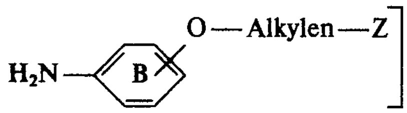

$\cdot\ m\ X^{\ominus}$ (4)

in welcher Alkylen, B, Z und $X^{(-)}$ die obengenannten Bedeutungen haben und m für die Zahl Null oder 1 steht, in analog bekannter und an und für sich üblicher Weise in Gegenwart einer Säure, die das Anionäquivalent $X^{(-)}$ enthält, umsetzt
oder indem man eine 2-Methylenindolin-Verbindung der allgemeinen Formel (5)

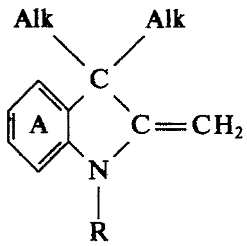

(5)

in welcher A, R und Alk die obengenannten Bedeutungen haben, mit einer N-Formylverbindung der allgemeinen Formel (6)

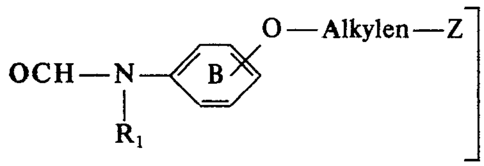

$\cdot\ m\ X^{\ominus}$ (6)

in welcher Alkylen, B, $R_1$, Z, m und $X^{(-)}$ die obengenannten Bedeutungen haben, in analog bekannter und an und für sich üblicher Weise in Gegenwart einer Säure, die das Anionäquivalent $X^{(-)}$ enthält, umsetzt
oder indem man, falls $R_1$ eine gegebenenfalls substituierte Alkylgruppe bedeutet, eine Azamethinverbindung der allgemeinen Formel (7) oder (7a)

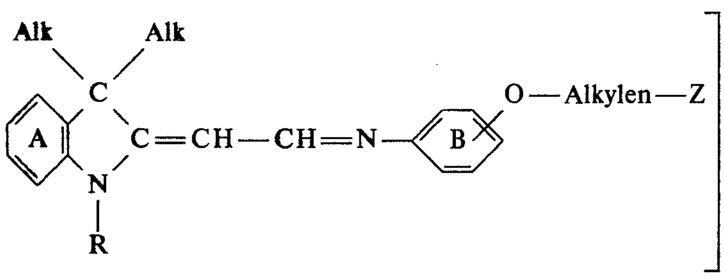

$\cdot\ m\ X^{\ominus}$ (7)

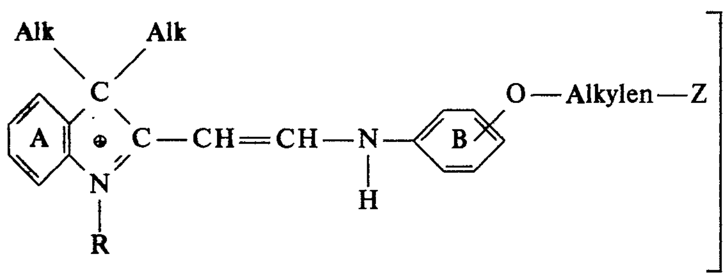

$\cdot\ n\ X^{\ominus}$ (7a)

in welchen A, B, R, Alk, Alkylen, Z, m, n und $X^{(-)}$ die obengenannten Bedeutungen haben, in analog bekannter und an und für sich üblicher Weise mit einem Alkylierungsmittel, das den gegebenenfalls substituierten Alkylrest $R_1$ (bzw. $R_4$) enthält, umsetzt.

Die neuen Azamethinverbindungen der allgemeinen Formel (1), in denen der Formelrest Y für ein Stickstoffatom steht, lassen sich in erfindungsgemäßer Weise herstellen, indem man eine 2-Methylen-indolin-Verbindung der obengenannten allgemeinen Formel (5) mit einer Diazoniumverbindung der allgemeinen Formel (8)

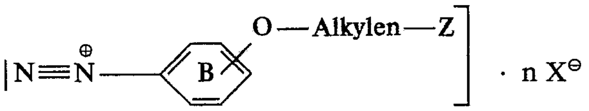

(8)

in welcher B, Alkylen, Z, n und $X^{\ominus}$ die obengenannten Bedeutungen haben, in analog bekannter und an und für sich üblicher Weise kuppelt und das so erhaltene Kupplungsprodukt der allgemeinen Formel (9)

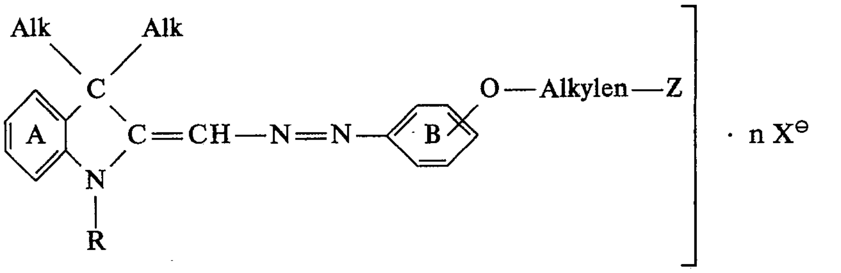

(9)

in welcher A, B, R, Alk, Alkylen, Z, n und $X^{(-)}$ die obengenannten Bedeutungen haben, in analog bekannter und an und für sich üblicher Weise mit einem Alkylierungsmittel, das eine gegebenenfalls substituierte Alkylgruppe $R_1$ (bzw. $R_4$) enthält, umsetzt
oder indem man, falls die Formelreste R und $R_1$ gleiche Bedeutungen haben, eine Diazoniumverbindung der obengenannten Formel (8) mit einer Indoleninverbindung der allgemeinen Formel (10)

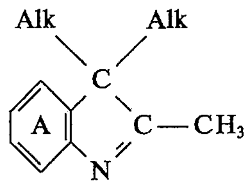

(10)

in welcher A und Alk die obengenannten Bedeutungen haben, in analog bekannter und an und für sich üblicher Weise kuppelt und die erhaltene Hydrazonverbindung der allgemeinen Formel (11)

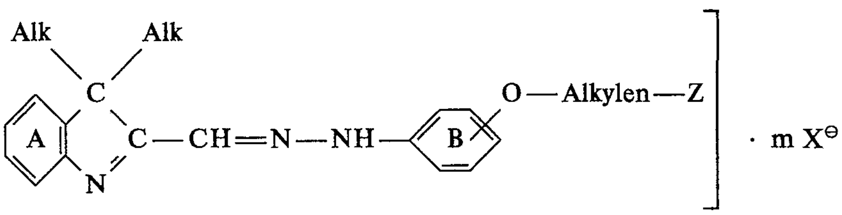

(11)

in welcher A, B, Alk, Alkylen, Z, m und $X^{(-)}$ die obengenannten Bedeutungen haben, mit der 2molaren Menge, — falls Z in Formel (1) ein Rest der Formel (2b) und in Formel (11) ein Rest der Formel (2a) ist, mit der 3molaren Menge —, an einem Alkylierungsmittel, das die gegebenenfalls substituierte Alkylgruppe R (bzw. $R_1$ bzw. $R_4$) enthält, in analog bekannter und an und für sich üblicher Weise umsetzt.

Die neuen basischen Verbindungen der allgemeinen Formel (1A) erhält man aus den obengenannten Verbindungen der allgemeinen Formel (9), in welcher Z eine Gruppe der Formel (2a) und n die Zahl 1 ist, in analog bekannter und an und für sich üblicher Weise durch Umsetzung dieser Salze mit einer basischen Verbindung, wie Ammoniak, einem Alkalihydroxid oder -carbonat, und Überführung in deren basischen Verbindungen.

Die Salze der allgemeinen Formel (1B) entsprechen den erwähnten Verbindungen der allgemeinen Formel (9), in welcher Z für die Gruppe der Formel (2a) und n die Zahl 1 ist; sie lassen sich aus den Basen der Formel (1A) in einer dem Fachmann geläufigen und üblichen Weise durch Umsetzung mit einer Säure herstellen.

Anionen entsprechend dem Äquivalent $X^{(-)}$ sind beispielsweise das Chlorid-, Bromid-, Sulfat-, Nitrat-, Jodid-, Rhodanid-, Acetat-, Propionat-, Formiat- oder das Oxalatanion oder ein niederes Alkosulfatanion, wie das Metho- oder Äthosulfat-Anion, oder die Anionen der Zitronensäure, Milchsäure, der Phosphorsäure, der Phosphorwolframsäure, der Perchlorsäure, von aromatischen Sulfonsäuren, wie der Naphthalin-1,5-disulfonsäure, oder das Trichlorzink-, Tetrachlorzink- oder Tetrafluorborat-Anion.

Die obengenannte Umsetzung einer Verbindung der allgemeinen Formel (3) mit einer Verbindung der allgemeinen Formel (4) zu Methinverbindungen der allgemeinen Formel (1) mit Y dem oben

erwähnten Methinrest kann in an sich üblicher Weise analog zu bekannten Verfahrensweisen durchgeführt werden; so kann sie beispielsweise mit äquimolaren Mengen der Ausgangsverbindungen in einer organischen oder anorganischen Säure mit einem farblosen Anion oder in deren Mischungen mit Wasser bei einer Temperatur von 10 bis 140°C, vorzugsweise bei 20 bis 60°C durchgeführt werden. In gleicher Weise lassen sich die Methylenindoline der allgemeinen Formel (5) mit den N-Formylverbindungen der allgemeinen Formel (6) umsetzen.

Hierfür geeignete Säuren sind z. B. verdünnte wäßrige Mineralsäuren, wie Schwefelsäure, Salzsäure oder Phosphorsäure, weiterhin niedere Alkancarbonsäuren, wie Ameisensäure, Essigsäure, Propionsäure, Milchsäure, Zitronensäure, und deren Mischungen mit Wasser oder niederen Alkanolen, wie Methanol oder Äthanol, oder mit Aceton, Dimethylformamid oder Dimethylsulfoxid.

Die obengenannten Kupplungsreaktionen zu den Kupplungsprodukten der allgemeinen Formeln (9) und (11) können ebenfalls in an und für sich üblicher Weise analog zu bekannten Verfahrensmaßnahmen durchgeführt werden. So erfolgt die Diazotierung des Amins der allgemeinen Formel (4) zur Diazoniumverbindung der allgemeinen Formel (8) in altbekannter Verfahrensweise in saurer Lösung, beispielsweise in verdünnter wäßriger Salzsäure, mit Alkalinitrit bei einer Temperatur zwischen −10°C und +10°C, ebenso in altbekannter Weise die nachfolgende Umsetzung (Kupplung) mit den Indolderivaten der allgemeinen Formel (5) bzw. (10) in wäßriger Lösung bei einem pH-Wert zwischen 1 und 9. Aus den so erhaltenen Salzen kann die freie Basenverbindung, so insbesondere auch die der allgemeinen Formel (1A), durch Zugabe eines basischen Mittels, wie beispielsweise Natriumhydroxid, Kaliumhydroxid, Natriumcarbonat, Kaliumcarbonat, Ammoniak, ausgefällt werden. Hierbei scheidet sich die freie Base in manchen Fällen zuerst ölig aus, kristallisiert meist aber nach einiger Zeit, so daß eine Abtrennung durch Filtration möglich ist. Die Überführung der erhaltenen Basen entsprechend den Verbindungen der allgemeinen Formeln (7), (9) und (11) werden dann mit einem alkylierend wirkenden Mittel, das die gegebenenfalls substituierte Alkylgruppe $R_1$ (bzw. $R_4$) enthält, umgesetzt; die Alkylierungsreaktion kann ebenso in an sich üblicher Weise analog zu bekannten Alkylierungsreaktionen in wäßrigem oder wäßrig-organischem Medium oder organischem Medium (wobei das organische Medium inert gegen Alkylierungsreaktionen ist) und bei einem pH-Wert von 5 bis 10 und einer Temperatur zwischen 20 bis 150°C, vorzugsweise 30 bis 90°C, durchgeführt werden; zur Einhaltung des pH-Bereiches führt man die Alkylierung vorteilhaft in Gegenwart eines säurebindenden Mittels durch, wie beispielsweise Magnesiumoxid, Natriumbicarbonat, Calciumoxid, Calciumcarbonat, Natriumcarbonat, Kaliumcarbonat, Zinkoxid oder einer nicht-alkylierbaren organischen Base (s. beispielsweise BE-Patentschrift 735 565).

Bei den Alkylierungsreaktionen der oben erwähnten Verfahrensvarianten zur Herstellung der erfindungsgemäßen Verbindungen der allgemeinen Formel (1) kann, ausgehend von den Verbindungen der allgemeinen Formeln (7) und (9), der Rest $R_1$ eingeführt werden und, falls erwünscht auch der Rest $R_4$ in Z. Bei der erfindungsgemäßen Alkylierung der Basen entsprechend den Verbindungen der allgemeinen Formel (11) können die gegebenenfalls substituierten Alkylgruppen entsprechend den Resten R, $R_1$ und, erwünschtenfalls, $R_4$ gleichzeitig eingeführt werden; R, $R_1$ und $R_4$ sind dann untereinander gleich.

Im allgemeinen erfolgt die Alkylierungsreaktion in wäßriger, wäßrig-alkoholischer oder alkoholischer Lösung oder Suspension, wobei die niederen Alkohole das organische Medium darstellen. Die Alkylierung erfolgt mit einem Überschuß an dem Alkylierungsmittel, da diese, wie üblich, leicht hydrolysierbar sind.

Alkylierungsmittel sind beispielsweise die entsprechenden niederen Alkylhalogenide, die niederen Alkylester der aromatischen Sulfonsäuren und die niederen Dialkylschwefelsäureester, wie beispielsweise Methylchlorid, Methylbromid, Methyljodid, Äthylbromid, Äthyljodid, Propylbromid, Propyljodid, Benzylchlorid, Dimethylsulfat, Diäthylsulfat, Benzolsulfonsäuremethylester und p-Toluolsulfonsäuremethylester und deren Äthyl-, Propyl- und Butylester, des weiteren Chloracetamid, β-Chlorpropionitril, Äthylenchlorhydrin, niedere Alkylenoxide und Acrylderivate, wie beispielsweise Propylenoxid und Acrylsäureamid.

Alkylenoxide und Acrylderivate als Alkylierungsmittel werden zweckmäßigerweise in Gegenwart einer anorganischen oder organischen Säure in die Alkylierungsreaktion eingesetzt.

Verschiedentlich kann es zweckmäßig sein, die Alkylierungsreaktion in einem organischen Lösungsmittel durchzuführen, wie z. B. in Aceton, Chloroform, Dimethylformamid, Toluol, Chlorbenzol, N-Methyl-pyrrolidon. In diesem Medium genügt es im allgemeinen, das Alkylierungsmittel in äquimolarer Menge einzusetzen, doch ist es auch hier vorteilhaft, eine basische Verbindung, wie z. B. Magnesiumoxid, zur Vervollständigung der Alkylierungsreaktion zuzugeben.

Die Isolierung der kationischen Verbindungen der allgemeinen Formel (1) und gegebenenfalls (1B) bzw. (9) aus den Herstellungsgemischen kann in der Weise erfolgen, daß man ein eventuell verwendetes organisches Lösemittel mit Wasserdampf abtreibt und die Salze aus der wäßrigen Lösung durch Zugabe eines Elektrolytes, wie Natriumchlorid, Kaliumchlorid oder Natriumsulfat, aussalzt. Sofern die Salze bereits selbst schwer löslich sind, lassen sie sich durch Filtration gewinnen. Lösliche Salze, die nach einer erfindungsgemäßen Verfahrensweise erhalten wurden, können auch durch Zugabe einer Verbindung, die ein Anion enthält, das das leichtlösliche Salz in ein schwerlösliches und gut kristallisierendes Salz überführt, oder durch Zugabe einer Verbindung, die

infolge Komplexbildung mit dem Anion zu einem schwer löslichen und gut kristallisierenden Salz führen, ausgefällt und abfiltriert werden. Verbindungen dieser Art sind beispielsweise Natriumperchlorat, — zur Bildung der Perchloratsalze der Verbindungen der allgemeinen Formel (1), — Phosphorwolframsäure, Natrium-tetrafluorborat und Zinkchlorid, letzteres zur Bildung der Trichlorzink- und Tetrachlorzinksalze, ebenso hierfür bekannte aromatische Sulfonsäuren, wie die Naphthalin-1,5-disulfonsäure. Nach Filtration können die unlöslichen bzw. schwer löslichen Salze durch kurzes Waschen mit Wasser oder einem niederen Alkanol, wie Äthanol, rein und salzfrei erhalten werden.

Bevorzugt sind in den erfindungsgemäßen Azamethinverbindungen der allgemeinen Formel (1) als Anionen das Chlorid-, Sulfat-, Methosulfat-, Äthosulfat-, Tetrafluorborat- und Tetrachlorzink- und Rhodanid-Anion.

Von den erfindungsgemäßen quartären Azamethinverbindungen der allgemeinen Formel (1) sind bevorzugt die Verbindungen der allgemeinen Formeln (1a), (1b), (1c) und (1d)

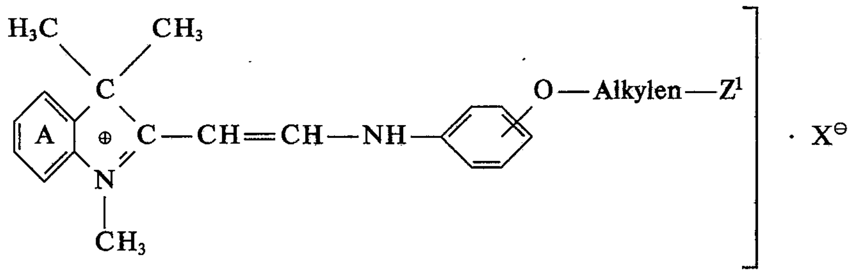
(1a)

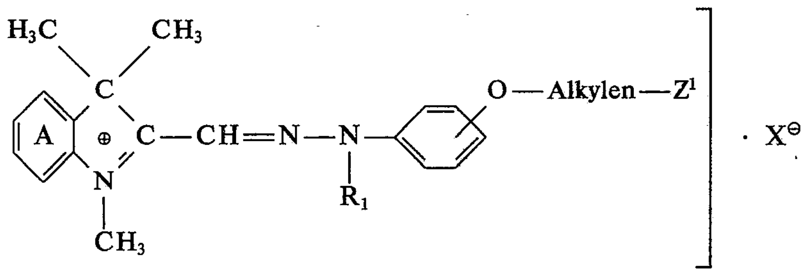
(1b)

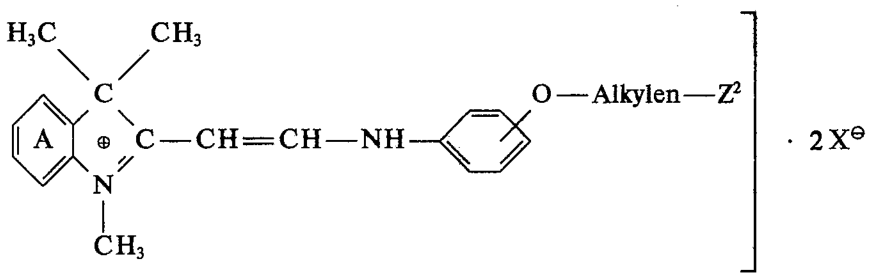
(1c)

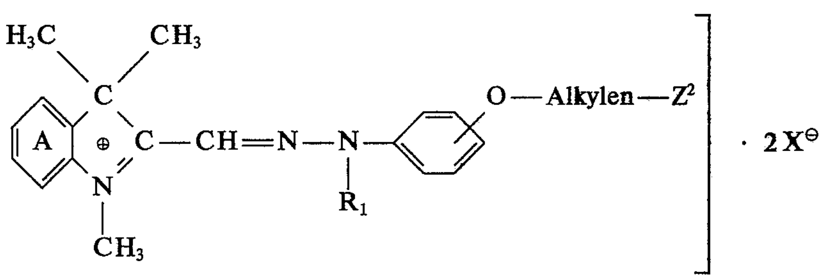
(1d)

zu nennen, in welchen der Benzolkern A durch vorzugsweise einen Substituenten aus der Gruppe Halogen, hiervon insbesondere Chlor, Methyl, Methoxy und Carbalkoxy mit 1 bis 4 C-Atomen im Alkylrest, hiervon insbesondere Carbomethoxy und Carbäthoxy, substituiert sein kann, Alkylen die obengenannte Bedeutung besitzt, $Z^1$ eine Dialkylaminogruppe mit jeweils 1 bis 4 C-Atomen in den Alkylresten und $Z^2$ eine Dialkylammonium- oder Trialkylammoniumgruppe mit jeweils 1 bis 4 C-Atomen an den Alkylresten bedeuten, $R_1$ eine Methyl- oder Äthylgruppe darstellt und $X^{(-)}$ eine der obengenannten, insbesondere bevorzugten, Bedeutungen hat.

Von den erfindungsgemäßen Einzelverbindungen sind insbesondere hervorzuheben die Verbindungen der allgemeinen Formeln (a) bis (h)

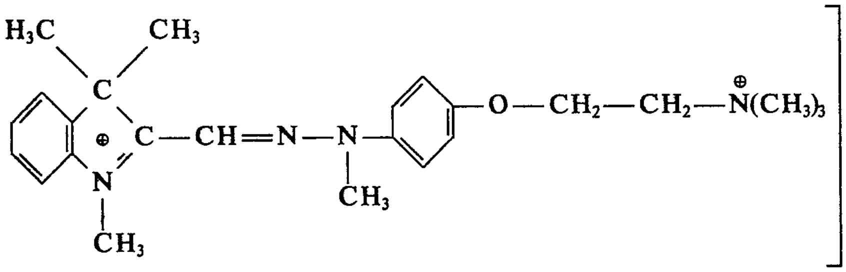 · X″ (a)

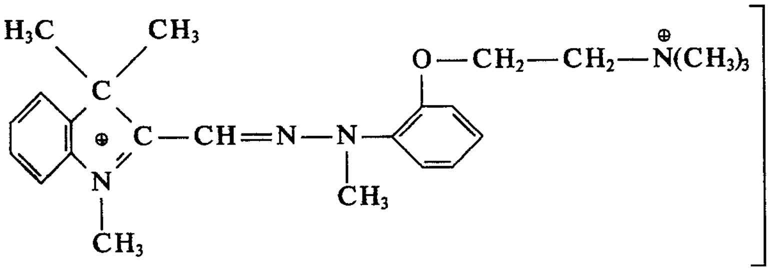 · X″ (b)

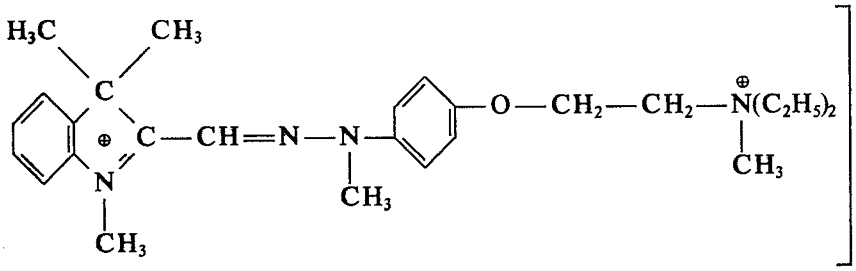 · X″ (c)

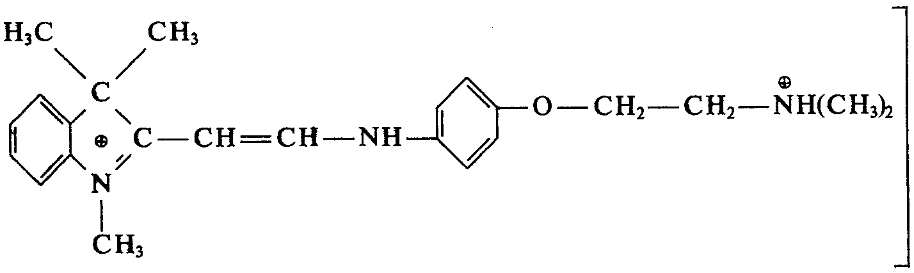 · X″ (d)

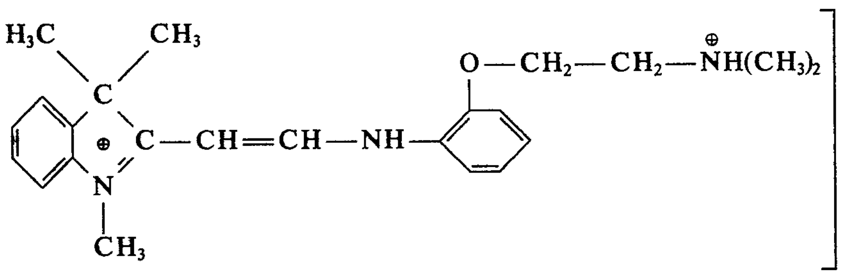 · X″ (e)

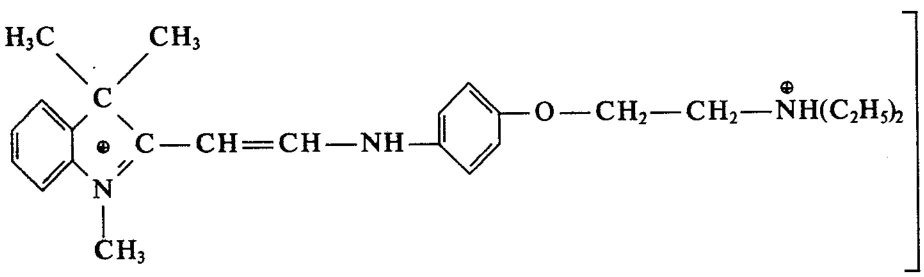 · X″ (f)

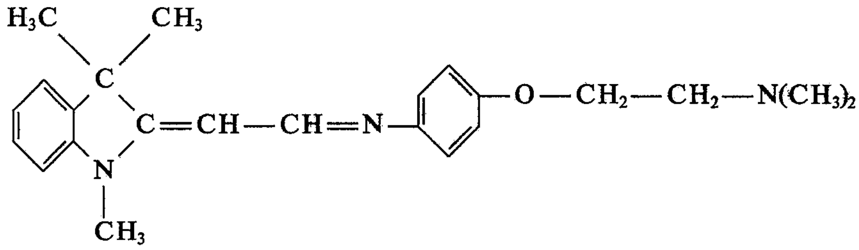

(g)

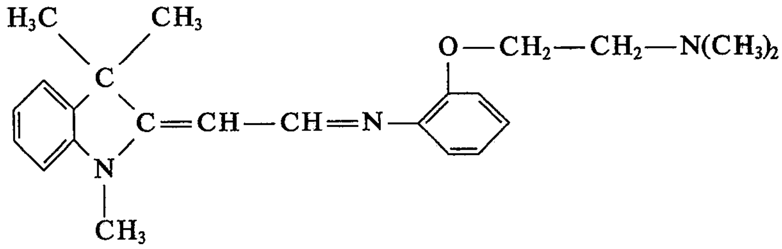

(h)

In diesen Formeln (a) bis (f) steht X'' für ein farbloses Anionäquivalent, d. h. hier für zwei einfach geladene Anionen oder für ein zweifach geladenes Anion. In den Formeln (a), (b), (c) und (e) stellt X'' bevorzugt zwei Tetrafluorboratanionen dar; in Formel (b) ist X'' auch bevorzugt das Tetrachlorzinkanion. Ebenso ist in den Formeln (d) und (f) X'' bevorzugt das Tetrachlorzinkanion, und in Formel (d) bedeutet X'' weiterhin bevorzugt zwei Acetatanionen.

Die als Ausgangsverbindungen zur Herstellung der erfindungsgemäßen Azamethinverbindungen der allgemeinen Formeln (1) und (1A) verwendbaren Verbindungen der allgemeinen Formeln (3), (4), (5) und (10) können nach bekannten Verfahren hergestellt werden und sind beispielsweise aus der deutschen Patentschrift 501 088, der deutschen Auslegeschrift 1 906 832 und den deutschen Offenlegungsschriften 2 040 653 und 2 154 246 bekannt.

Die erfindungsgemäßen Azamethinverbindungen, insbesondere die quartären Azamethinverbindungen der allgemeinen Formel (1), bevorzugt der allgemeinen Formeln (1a) und (1b), sind wertvolle Farbmittel, insbesondere wertvolle wasserlösliche bzw. säurelösliche Farbstoffe, die sich zum Färben (einschließlich Bedrucken) von Materialien aus Leder, tannierter Baumwolle und ligninhaltigen Fasern, wie Kokos, Jute und Sisal, eignen, insbesondere jedoch zum Färben von — vorzugsweise sauer modifiziertem — Polyacrylnitril und von — vorzugsweise sauer modifizierten — Mischpolymerisaten des Acrylnitrils mit anderen Vinylverbindungen, des weiteren von sauer modifizierten aromatischen Polyestern sowie von sauer modifizierten Polyamiden. Diese synthetischen Materialien werden vorzugsweise in Form von Materialien faseriger Struktur, wie in Form der Fasern selbst, von Fäden, Flocken, Bändern, Geweben oder Gewirken eingesetzt. Die erfindungsgemäßen Azamethinverbindungen eignen sich weiterhin zur Herstellung von Schreibflüssigkeiten, Stempelfarben und Kugelschreiberpasten und lassen sich ebenso im Gummidruck verwenden. Weiterhin können sie zum Färben von Papier dienen.

Die vorliegende Erfindung betrifft somit auch die Verwendung der Azamethinverbindungen der allgemeinen Formeln (1) zum Färben (einschließlich Bedrucken) der obengenannten Materialien bzw. Verfahren zum Färben (einschließlich Bedrucken) dieser Materialien, bei welchem man die Farbstoffe in an und für sich für basische und kationische Farbstoffe üblicher Weise auf das Material aufbringt und sie darauf fixiert.

Vinylverbindungen, die als Komponente in das Mischpolymerisat mit dem Acrylnitril eingesetzt werden können, sind Vinylchlorid, Vinylidenchlorid, Vinylfluorid, Vinylacetat, Vinylpyridin, Vinylimidazol, Vinylalkohol, Acryl- und Methacrylsäureester und -amide, weiterhin as.-Dicyanäthylen.

Sauer modifizierte aromatische Polyester, die mit den erfindungsgemäßen Verbindungen gefärbt werden können, sind beispielsweise Polykondensationsprodukte aus Sulfoterephthalsäure und Äthylenglykol, d. h. sulfonsäuregruppenhaltige Polyäthylenglycolterephthalate. Solche Polyester sind beispielsweise aus der belgischen Patentschrift 549 179 und aus den US-Patentschriften 2 893 816 und 3 379 723 bekannt. — Sauer modifizierte Polyamide sind z. B. in der belgischen Patentschrift 706 104 beschrieben.

Das Färben der sauer modifizierten Materialien, insbesondere in Faserform, erfolgt allgemein aus schwach saurer Flotte bei einem pH-Wert von etwa 3,5 bis 6,5; hierbei arbeitet man in der Regel analog zu bekannten Verfahrensweisen zur Färbung von Polyamidfasern oder sauer modifizierten Fasermaterialien. Die Färbung beginnt zweckmäßigerweise durch Einbringen des zu färbenden Materials in das schwach sauer eingestellte Färbebad bei einer Temperatur von 40 bis 60°C, allmählicher Steigerung der Färbetemperatur und abschließender Färbung bei Kochtemperatur des Färbebades. Ebenso kann man auch unter Druck bei Temperaturen von oberhalb 100°C färben. Des weiteren lassen sich die erfindungsgemäßen Verbindungen auch auf die unverstreckte, in Gelform

vorliegende Faser, wie beispielsweise solche der Polyacrylnitrilstruktur, aufbringen.

Die Färbungen mit den erfindungsgemäßen Verbindungen auf Polyacrylnitril und dessen Copolymerisaten, auf sauer modifizierten Polyestern und sauer modifziertem Polyamid zeichnen sich durch gute Licht-, Naß-, Reib- und Sublimierechtheiten aus. Die erfindungsgemäßen Verbindungen besitzen eine hohe Affinität zu diesen Substraten und deren entsprechenden Fasermaterialien. Sie besitzen eine gute Kochtemperaturstabilität und haben sich als schnellziehend in Kombination mit anderen basischen Farbstoffen erwiesen. Weiterhin zeigen sie eine gute Salzverträglichkeit und eine gute pH-Stabilität.

Die erfindungsgemäßen Verbindungen bilden weiterhin mit anionischen Fällungsmitteln, wie Tonerde, Tannin, Phosphorsäurewolfram-(molybdän)-säuren lichtechte Pigmente, die vorteilhaft im Papierdruck eingesetzt werden können.

Die erfindungsgemäßen Verbindungen lassen sich als Farbmittel einzeln oder in Mischungen miteinander anwenden.

Zur Bereitung der wäßrigen Färbebäder und Druckpasten kann man die Farbstoffe in Form von Pulvern, die gegebenenfalls Stellmittel, wie beispielsweise anorganische Salze (Natriumsulfat, Natriumchlorid), Dextrin und gegebenenfalls weitere Zusätze, wie Färbehilfsmittel, faseraffine und farbstoffaffine Egalisierhilfsmittel, enthalten, verwenden. Vorteilhaft setzt man jedoch einfacher zu handhabende konzentrierte wäßrige Lösungen der Farbstoffe ein, die etwa 20 bis 60 Gewichtsprozent an Farbstoff, eine oder mehrere niedere aliphatische Carbonsäuren, wie Ameisensäure, Essigsäure, Propionsäure oder Milchsäure, sowie gegebenenfalls in konzentrierten Färbepreparationen geeignete und übliche weitere Zusätze, wie wasserlösliche mehrwertige Alkohole, deren Äther oder Ester, Polyäther, aliphatische Carbonsäureamide, Lactame, Lactone, Nitrile, Dimethylsulfoxid, Diacetonalkohol, Dioxan, Tetrahydrofuran oder Harnstoff enthalten.

Zur Bereitung der Färbebäder, die nur organische Lösemittel, beispielsweise Chlorkohlenwasserstoff, enthalten, verwendet man vorteilhaft konzentrierte Lösungen, die den Farbstoff als freie Base oder als Salz einer einbasischen organischen Säure, Chlorkohlenwasserstoffe, organische Säuren oder polare organische Lösemittel enthalten.

In einigen Fällen kann es vorteilhaft sein, die Anhydroverbindungen der Formeln (1A) und (7) sowie die aus den erfindungsgemäßen Verbindungen der allgemeinen Formel (1) durch überschüssiges Alkali erhältlichen Carbinolbasen der allgemeinen Formel (12)

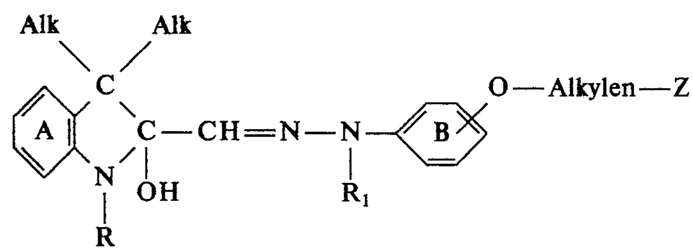

(12)

in welcher A, B, R, $R_1$, Alk, Alkylen und Z die obengenannten Bedeutungen haben, zur Spinnfärbung einzusetzen. Da diese Verbindungen der Formeln (1A), (7) und (12) in Wasser praktisch unlöslich sind, gelingt es durch genügendes Waschen mit Wasser, vollkommen salzfreie und somit rückstandsfreie, in Dimethylformamid oder Dimethylacetamid lösliche Färbepräparate zu erhalten. Da die Verbindungen in organischen Lösungsmitteln sehr gut löslich sind, können hochprozentige Lösungen hiervon, wie etwa 50gew.-%ige Lösungen, in Dimethylformamid oder Dimethylacetamid hergestellt werden. Diese Lösungen kann man direkt den Polymerlösungen zusetzen, wobei die Protonierung zum Farbsalz und die Fixierung durch die sauren Gruppen des Polymers erfolgen. Des weiteren kann man besonders vorteilhaft auch Lösungen von Farbsalzen mit solchen Säuren herstellen, die wegen ihrer Leichtlöslichkeit oder schwierigen Kristallisationsfähigkeit aus den wäßrigen Lösungen nicht oder nur unvollkommen und nur mit einer größeren Salzbelastung abgeschieden werden können. Dies gilt besonders für die Salze von organischen Säuren, wie beispielsweise die Acetate, Formiate und Propionate, die man in einfacher Weise durch Zugabe der äquivalenten Menge von Essigsäure, Ameisensäure oder Propionsäure zu den Lösungen der Verbindungen der Formeln (1A) oder (12) in der Polymerlösung herstellen kann.

Die neuen quartären Azamethinverbindungen der allgemeinen Formel (1) eignen sich weiterhin in erfindungsgemäßer Weise zum Spinnfärben von sauer modifizierten Fasern, insbesondere hervorragend zum Spinnfärben von sauer modifizierten Polyacrylnitrilfasern und deren Copolymerisate nach den üblichen Naß- und Trockenspinnverfahrensweisen. Die Färbungen zeichnen sich durch hohe Farbstärke, klare Farbtöne, hervorragende Lichtechtheiten und Naßechtheiten aus. Obwohl sie, je nach Anion, wasserlöslich sein können und insbesondere sehr gut in den zur Herstellung der Spinnlösungen dienenden Lösungsmitteln, wie z. B. Dimethylformamid, Dimethylacetamid, Dimethylsulfoxid und Äthylencarbonat, löslich sind, bluten sie nicht in die Koagulations-, Streck- und Waschbäder aus.

Die nachstehenden Beispiele dienen zur Erläuterung der Erfindung. Die Teile sind Gewichtsteile, die Prozentangaben beziehen sich auf Gewichtsprozente, sofern nicht anders vermerkt. Die Gewichtsteile zu Volumenteilen wie Kilogramm zum Liter.

## Beispiel 1

18 Teile 2-(2'-Aminophenoxy)-1-(N,N-dimethylamino)-äthan werden in üblicher Weise in 200 Teilen Wasser und 42 Volumenteilen einer 30%igen wäßrigen Salzsäure bei 0 bis 10° C mit 21 Volumenteilen einer wäßrigen 5 n-Natriumnitrit-Lösung diazotiert. Die erhaltene Diazoniumsalzlösung läßt man in eine Suspension von 17,5 Teilen 1,3,3-Trimethyl-2-methylenindolin in 100 Teilen Wasser einlaufen. Die Kupplung wird durch Eintropfen von 10,5 Volumenteilen einer wäßrigen 5 n-Natronlauge bei einem pH-Wert von 1,8 bis 2,2 beendet. Die Farbstoffbase der Formel

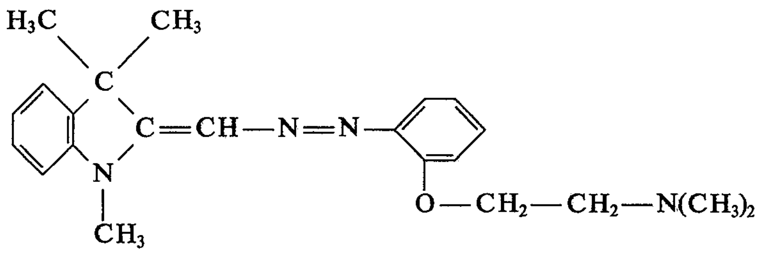

wird mit Ammoniak ausgefällt, abgesaugt und getrocknet. Man erhält sie in einer Ausbeute von etwa 37 Teilen als gelbes Kristallpulver.

Mit Säuren, beispielsweise mit Salzsäure oder mit Essigsäure, wird sie in wäßriger Lösung in das entsprechende Ammoniumsalz übergeführt und kann daraus durch Sprühtrocknung gewonnen werden. Im sauren Bade färbt dieser Farbstoff unter Zusatz der üblichen Färbehilfsmittel und bei Anwendung der üblichen Temperaturen Polyacrylnitrilfasern in echten gelben Tönen.

## Beispiel 2

18,2 Teile der in Beispiel 1 beschriebenen Azamethinverbindung in Form der Base werden zusammen mit 4 Teilen Magnesiumoxid in 100 Teilen Wasser angerührt; bei etwa 40 bis 50° C werden tropfenweise 20 Volumenteile Dimethylsulfat zugesetzt, wobei der pH-Wert von 9 auf 8,4 abfällt. Man rührt 4 Stunden bei 40 bis 50° C nach, verdünnt mit 20 Teilen Wasser, klärt die erhaltene Lösung und säuert sie mit 10 Volumenteilen einer wäßrigen 30%igen Salzsäure bis zu einem pH-Wert von 3,5 an. In diese Lösung läßt man eine Lösung von 12 Teilen Natriumtetrafluorborat in 100 Teilen Wasser unter Rühren einlaufen. Man saugt das kristallin ausgefallene Farbstoffsalz nach einer Stunde ab, wäscht mit 100 Teilen Wasser salzfrei und trocknet es.

Es werden etwa 25 Teile einer gelbbraunen Verbindung der Formel

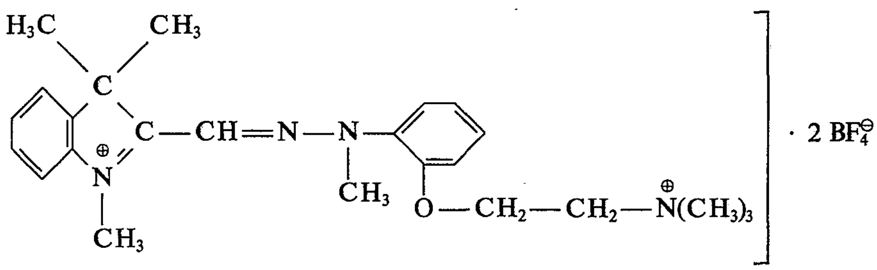

erhalten, die sich zu über 20% in Dimethylformamid und Dimethylacetamid löst. Diese Verbindung eignet sich als Farbstoff sehr gut zum Spinnfärben von Polyacrylnitril nach einem üblichen Naß- und Trockenspinnverfahren. Man erhält eine rotstichig-gelbe Färbung der Polyacrylnitrilfaser, die hervorragend lichtecht ist und eine sehr gute Reibechtheit, Thermofixierechtheit, Waschechtheit, saure und alkalische Schweißechtheit, Trockenreinigungsechtheit und Natriumchloritbleichechtheit besitzt. Besonders hervorzuheben ist die äußerst geringe Ausblutung des Farbstoffes aus der versponnenen Faser in die Fäll-, Streck- und Waschbäder.

Beispiel 3

Man verfährt zur Herstellung einer basischen Azamethinverbindung in gleicher Weise, wie in Beispiel 1 beschrieben, setzt jedoch als Diazokomponente 18 Teile 2-(4'-Aminophenoxy)-1-(N,N-dimethylamino)-äthan ein. Man erhält etwa 36 Teile der Verbindung der Formel

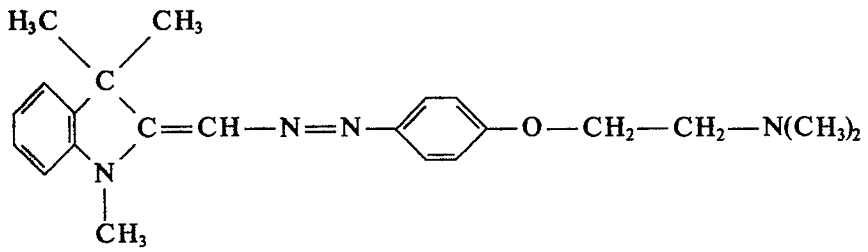

Sie kann durch Lösen in der äquivalenten Menge einer Säure, wie beispielsweise Salzsäure, Schwefelsäure oder Essigsäure, in das entsprechende Ammoniumsalz übergeführt werden, das sich beispielsweise durch Sprühtrocknung oder durch Aussalzen isolieren läßt. Aus saurem Bade analog üblichen Färbeweisen von Polyacrylnitrilfasern mit basischen oder kationischen Farbstoffen färbt diese Verbindung Polyacrylnitrilfasermaterialien in goldgelben, echten Tönen.

Beispiel 4

18,2 Teile der Azamethinverbindung des Beispiels 3 in Form der Base werden analog zur im Beispiel 2 beschriebenen Verfahrensweise mit 20 Volumenteilen Dimethylsulfat quaterniert; die nach Beendigung der Reaktion anschließend geklärte Reaktionslösung wird mit etwa 10 Volumenteilen einer 30%igen wäßrigen Salzsäure auf den pH-Wert von 3 eingestellt. Sodann gibt man 15 Volumenteile einer wäßrigen 64%igen Zinkchlorid-Lösung hinzu und fällt das erhaltene Chlorzinkdoppelsalz mit Natriumchlorid aus. Man saugt es ab, trocknet es und erhält ein braungelbes, kristallines Pulver, das etwa 30,5 Teile der Verbindung der Formel

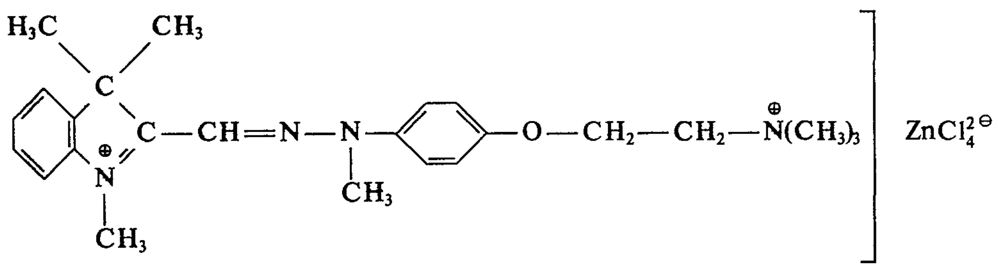

enthält. Diese Verbindung eignet sich hervorragend als Farbstoff nach üblichen Färbeweisen zum Färben von Polyacrylnitril- und sauer modifizierten Polyesterfasern, beispielsweise nach einem Ausziehverfahren; es werden Färbungen in goldgelben Farbtönen, die sehr gut lichtecht sind, erhalten.

Beispiel 5a

18 Teile 2-(2'-Aminophenoxy)-1-(N,N-dimethylamino)-äthan werden in 100 Teilen Wasser und 26 Volumenteilen einer 30%igen wäßrigen Salzsäure gelöst. 23 Teile Natriumtetrafluorborat werden hinzugegeben, danach tropfenweise bei 20°C eine Lösung von 20,5 Teilen 1,3,3-Trimethylindolin-2-methylenaldehyd in 25 Volumenteilen Eisessig unter Rühren. Das gebildete Salz der so hergestellten Azamethinverbindung beginnt bald auszukristallisieren; man läßt noch 12 Stunden bei Raumtemperatur nachrühren. Das Dünnschichtchromatogramm ergibt danach, daß kein Ausgangsmaterial mehr vorliegt und die gebildete Azamethinverbindung weitgehend ausgefallen ist. Man saugt sie ab, wäscht sie mit 100 Teilen Wasser salzfrei und trocknet sie. Man erhält etwa 52 Teile eines gelben kristallinen Pulvers der Verbindung der Formel

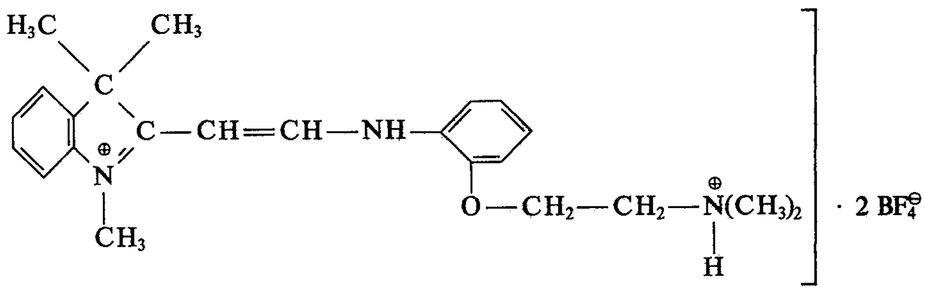

Sie hat sehr gute Farbstoffeigenschaften und färbt beispielsweise Polyacrylnitrilfasermaterialien aus schwach saurem Bade nach einer üblichen Ausziehfärbemethode in grünstichigen Gelbtönen mit sehr guter Lichtechtheit.

Die obige Verbindung eignet sich jedoch insbesondere zur Spinnfärbung von Polyacrylnitril nach üblichen Naß- und Trockenspinnverfahren. Man erhält damit hervorragend lichtechte, grünstichige gelbe Färbungen, die eine sehr gute Reibechtheit, Thermofixierechtheit, Waschechtheit, Trockenreinigungsechtheit, Schweißechtheit und Natriumchloritbleichechtheit besitzen.

Besonders hervorzuheben ist die sehr gute Löslichkeit dieses erfindungsgemäßen Salzes in Dimethylformamid und Dimethylacetamid von über 20% und die äußerst geringe Ausblutung in die Fäll-, Streck- und Waschbäder.

Beispiel 5b

18 Teile 2-(4'-Aminophenoxy)-1-(N,N-dimethylamino)-äthan werden in 50 Teilen Wasser und 50 Volumenteilen einer 5 n-wäßrigen Salzsäure gelöst und mit einer Lösung von 20,5 Teilen 1,3,3-Trimethyl-indolin-2-methylenaldehyd in 50 Volumenteilen Eisessig versetzt. Man rührt sodann noch etwa 12 Stunden bei Raumtemperatur, filtriert die gelbbraune Lösung und tropft in das Filtrat eine Lösung von 15 Teilen Zinkchlorid in 100 Teilen Wasser langsam ein. Das Zinkchlorid-Doppelsalz der hergestellten Azamethinverbindung scheidet sich in bräunlich-gelben Kristallen aus. Man saugt ab, wäscht mit wenig Wasser nach und trocknet bei etwa 60° C. Es werden 54,5 Teile eines gelben Kristallpulvers der Verbindung der Formel

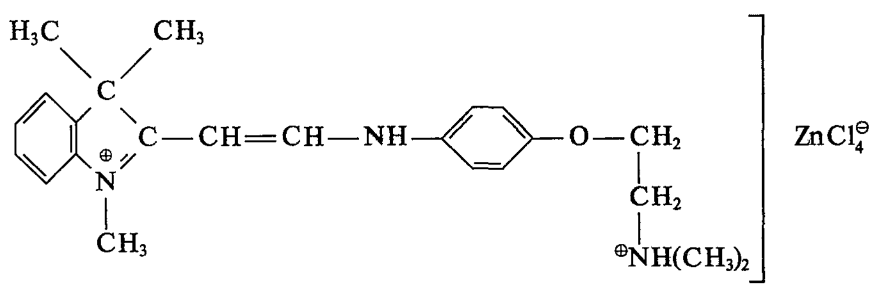

erhalten. Sie eignet sich besonders zur Spinnfärbung von Polyacrylnitril nach üblichen Naß- und Trockenspinnverfahren. Man erhält hervorragend lichtechte, grünstichig gelbe Färbungen, die eine sehr gute Reibechtheit, Thermofixierechtheit, Waschechtheit, Trockenreinigungsechtheit, Schweißechtheit und Natriumchloritbleichechtheit besitzen.

Besonders hervorzuheben ist die sehr gute Löslichkeit dieses erfindungsgemäßen Salzes in Dimethylformamid von etwa 30% und die äußerst geringe Ausblutung in die Fäll-, Streck- und Waschbäder.

Beispiel 6

25,6 Teile 2-(4'-Aminophenoxy)-1-(N-äthyl-N-phenyl)-aminoäthan werden in 100 Teilen Wasser und 26 Volumenteilen einer wäßrigen 30%igen Salzsäure gelöst. 23 Teile Natriumtetrafluorborat werden hinzugegeben. In diese Lösung läßt man bei 20° C eine Lösung von 20,5 Teilen 1,3,3-Trimethylindolin-2-methylenaldehyd in 25 Volumenteilen Eisessig langsam einlaufen. Das sich bildende Salz der Azomethinverbindung beginnt langsam auszufallen, gegebenenfalls zuerst als schmierige Substanz, die im Laufe von 12 Stunden beim Nachrühren kristallin wird. Man saugt das kristalline Produkt ab, wäscht es mit etwa 200 Teilen Wasser salzfrei und trocknet es. Es werden etwa 58 Teile der Verbindung der Formel

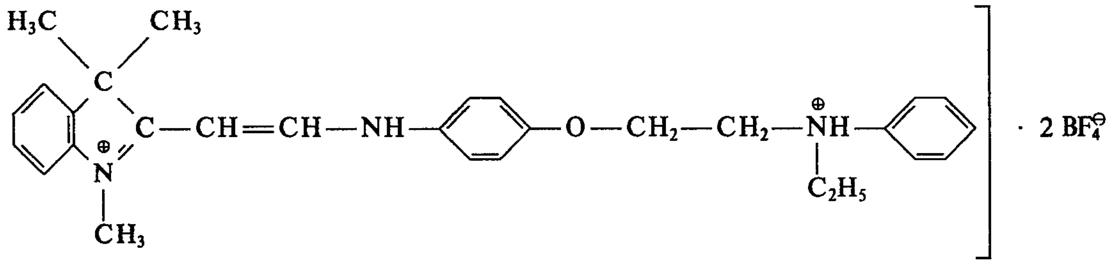

erhalten. Dieses Farbstoffsalz liefert in der Spinnfärbung von Polyacrylnitril in einem üblichen Naß- und Trockenspinnverfahren stark grünstichige Gelbfärbungen; die erhaltenen gefärbten Fäden zeigen die gleichen Echtheitseigenschaften wie die für den Farbstoff des Beispiels 5 genannten.

## Beispiele 7 bis 20

In den nachfolgenden Beispielen sind tabellarisch weitere erfindungsgemäße Verbindungen beschrieben. Sie lassen sich gleichfalls in erfindungsgemäßer Weise nach einem der in der Beschreibung offenbarten Verfahrensweisen, beispielsweise nach einer der in den vorstehenden Ausführungsbeispielen beschriebenen Reaktionsweisen, herstellen. Sie eignen sich ebenso als Farbstoffe sehr gut nach üblichen Färbeverfahren zum Färben von — vorzugsweise sauer modifizierten — Polyacrylnitrilfasermaterialien und anderen sauer modifizierten Materialien, wie beispielsweise sauer modifizierten Polyesterfasern und sauer modifizierten Polyamidfasern, mit guten Echtheitseigenschaften in den dazu gehörig angegebenen Farbtönen. Sie eignen sich insbesondere wegen ihrer guten Echtheitseigenschaften und der geringen Ausblutung in die Fäll-, Streck- und Waschbäder zum Spinnfärben von Polyacrylnitril nach einem üblichen Naß- und Trockenspinnverfahren.

| Bsp. | Verbindung entspr. allg. Formel (1) | Nuance der Färbg. |
|---|---|---|
| 7 | 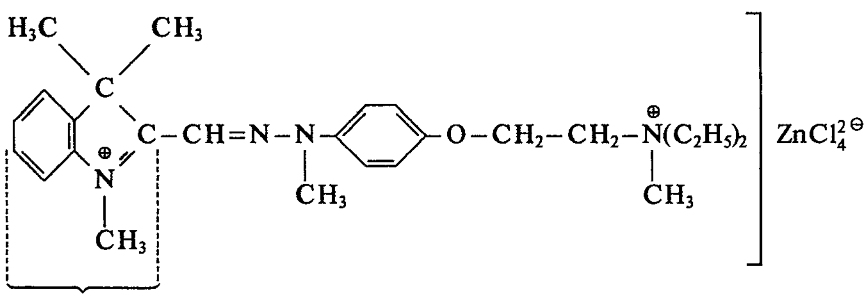<br>in den nachfolgenden Beispielen als D— bezeichnet | goldgelb |
| 8 | 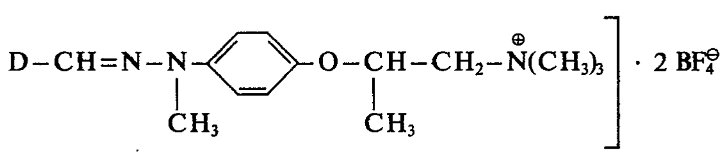 | goldgelb |
| 9 | 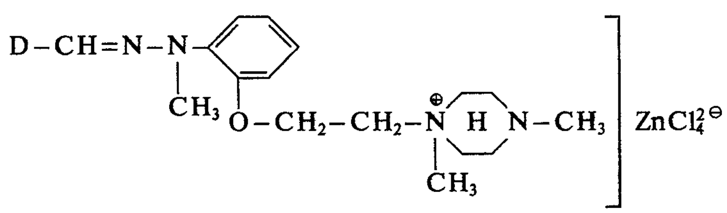 | goldgelb |

Fortsetzung

| Bsp. | Verbindung entspr. allg. Formel (1) | Nuance der Färbg. |
|---|---|---|
| 10 | 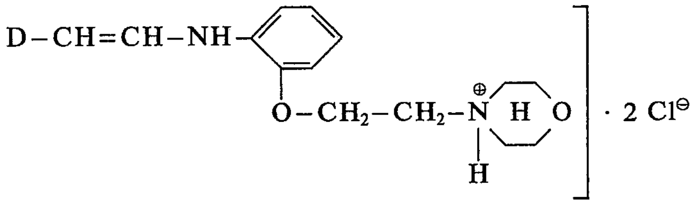 | gelb |
| 11 | 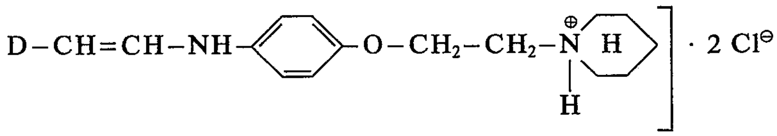 | gelb |
| 12 | 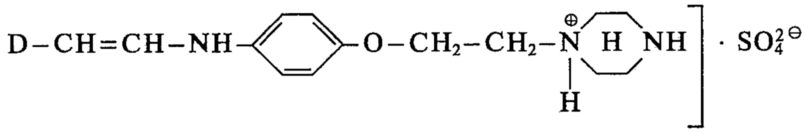 | gelb |
| 13 | 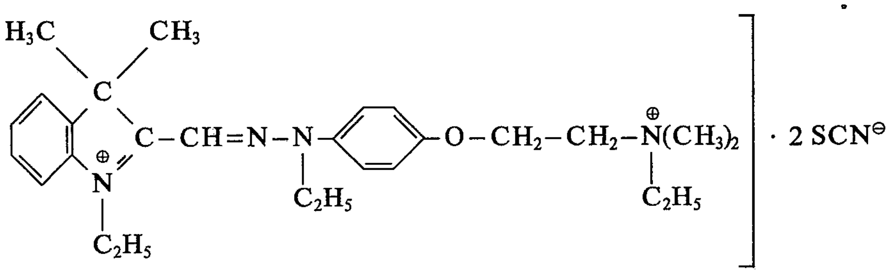 | goldgelb |
| 14 | 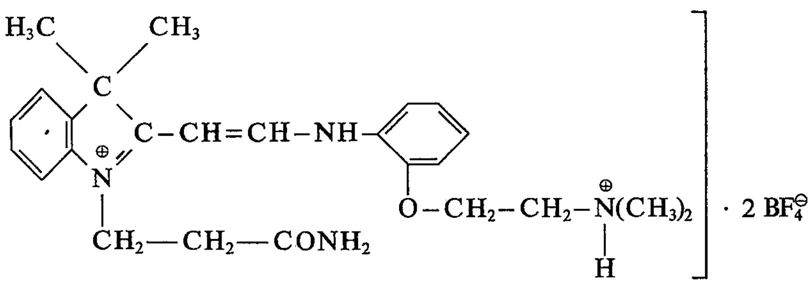 | gelb |
| 15 | 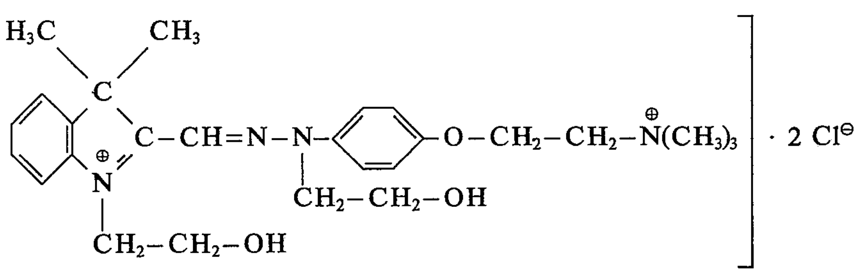 | goldgelb |
| 16 | 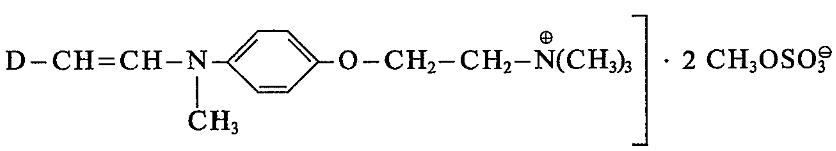 | gelb |

Fortsetzung

| Bsp. | Verbindung entspr. allg. Formel (1) | Nuance der Färbg. |
|---|---|---|
| 17 | 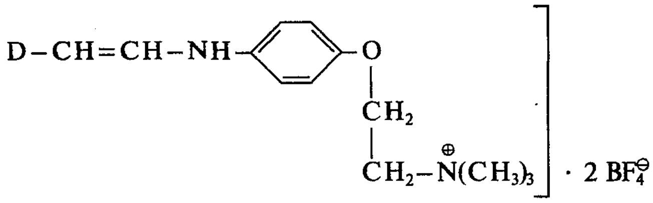 | gelb |
| 18 | 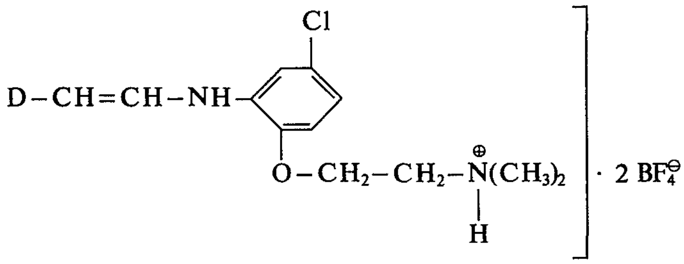 | gelb |
| 19 | 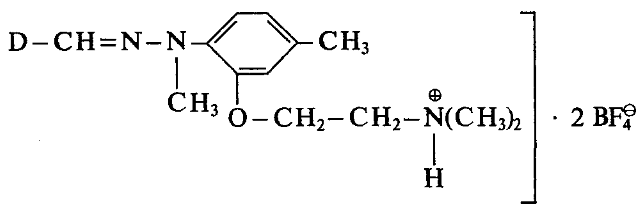 | goldgelb |
| 20 | 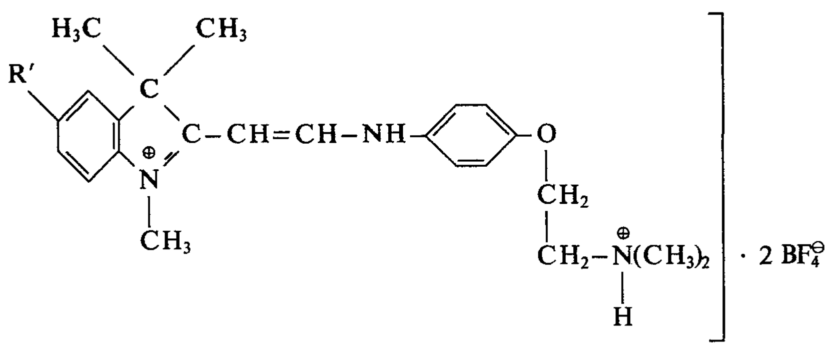 | |
| 20a | $R'=CH_3O-$ | gelb |
| 20b | $R'=CH_3-$ | gelb |
| 20c | $R'=Cl-$ | gelb |
| 20d | $R'=NO_2-$ | gelb |
| 20e | $R'=CH_3O-OC-$ | gelb |
| 21 | 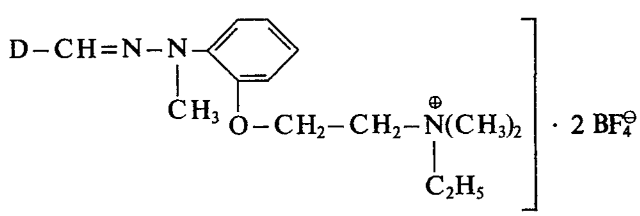 | gelb |

Fortsetzung

| Bsp. | Verbindung entspr. allg. Formel (1) | Nuance der Färbg. |
|---|---|---|
| 22 | 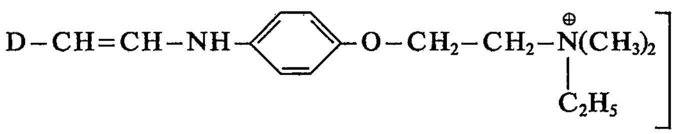 · 2 $BF_4^{\ominus}$ | gelb |
| 23 | 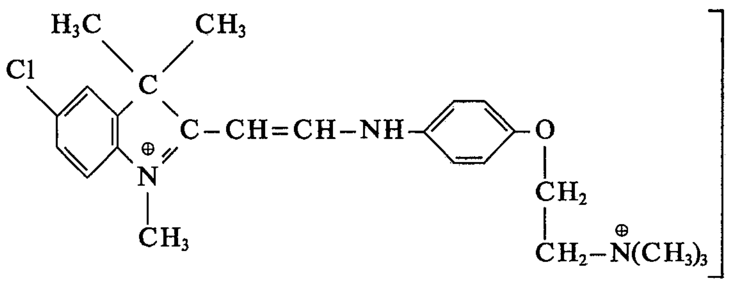 · 2 $Cl^{\ominus}$ | gelb |
| 24 | 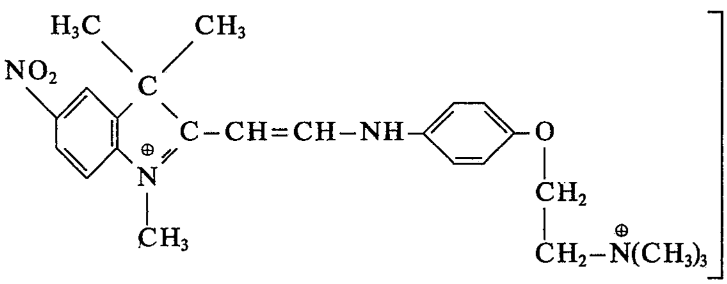 · 2 $Cl^{\ominus}$ | gelb |

Färbebeispiel A

20 Teile des Farbstoffsalzes von Beispiel 4 und 80 Teile Dextrin werden 4 Stunden lang in einer Pulvermühle gemahlen. (Die gleiche Farbstoffmischung läßt sich ebenfalls durch Anteigen in 100 Teilen Wasser und anschließender Sprühtrocknung gewinnen.) — Zur Herstellung eines wäßrigen Färbebades wird ein Teil des so erhaltenen Präparates mit einem Teil einer wäßrigen 40%igen Essigsäure angeteigt, der Brei mit 200 Teilen Wasser übergossen und kurz aufgekocht, sodann mit 7000 Teilen Wasser verdünnt und mit 2 Teilen Eisessig versetzt. In dieses Färbebad geht man bei 60° C mit 100 Teilen eines Polyacrylnitrilgewebes ein, das gegebenenfalls zuvor 10 bis 15 Minuten lang bei 60° C in einem Bad aus 8000 Teilen Wasser und 2000 Teilen Eisessig vorbehandelt wurde. — Das Färbebad wird innerhalb von 30 Minuten von 60° C auf 98 bis 100° C erwärmt; sodann wird 90 Minuten lang kochend weitergefärbt, anschließend das gefärbte Material herausgenommen und gründlich mit Wasser gespült. Man erhält eine rotstichig gelbe Färbung mit guter Lichtechtheit und guten Naßechtheiten.

Mit dem Farbstoffsalz des Beispiels 4 läßt sich eine konzentrierte Farbstofflösung aus 10 Teilen dieses Salzes in 60 Teilen Eisessig und 30 Teilen Wasser herstellen, die als beständige Lösung mit einem Farbstoffgehalt von etwa 10% zur Herstellung von Färbebädern und beispielsweise entsprechend der obigen Färbevorschrift zum Färben von Polyacrylnitril verwendet werden kann.

Färbebeispiel B

20 Teile des in Beispiel 4 beschriebenen Farbstoffes werden mit 80 Teilen Dextrin in einer Kugelmühle während 48 Stunden vermischt. Ein Teil des so erhaltenen Präparates wird mit einem Teil einer wäßrigen 40%igen Essigsäure angeteigt, der Brei mit 200 Teilen Wasser übergossen und kurz aufgekocht. Mit dieser Stammlösung kann wie folgt gefärbt werden:

1. Man verdünnt sie mit 7000 Teilen Wasser, setzt 21 Teile wasserfreies Natriumsulfat, 14 Teile Ammoniumsulfat, 14 Teile Ameisensäure und 15 Teile eines Carriers auf der Basis von Umsetzungsprodukten von Äthylenoxid mit Dichlorphenolen zu; zu dem so hergestellten Färbebad gibt man bei 60° C 100 Teile eines Polyestergewebes, das durch saure Gruppen

modifiziert ist; dieses Material wurde gegebenenfalls zuvor 10 bis 15 Minuten lang bei 60°C in einem Bad aus 8000 Teilen Wasser und 2 Teilen Eisessig vorbehandelt. — Das Färbebad wird nunmehr innerhalb von 30 Minuten auf eine Temperatur von 98 bis 100°C erwärmt, die Färbung eine Stunde lang kochend weitergeführt, das gefärbte Material herausgenommen und gründlich gespült. Es wird eine egale rotstichig gelbe Färbung mit guten Naßechtheiten und guter Lichtechtheit erhalten.

2. Man verdünnt obige Stammlösung mit 3000 Teilen Wasser, gibt 18 Teile wasserfreies Natriumsulfat und je 6 Teile Ammoniumsulfat und Ameisensäure hinzu, erwärmt es auf 60°C und bringt sodann 100 Teile eines sauer modifizierten Polyestergewebes ein. Dieses Bad wird sodann im geschlossenen Gefäß innerhalb von 45 Minuten auf 110°C erwärmt, die Färbung eine Stunde lang bei dieser Temperatur unter Bewegen des Färbebades und des zu färbenden Gewebes weitergeführt, das Bad danach innerhalb von 25 Minuten auf 60°C abgekühlt, das Färbegut herausgenommen und gut gespült. Man erhält eine egale rotstichig gelbe Färbung mit guten Nachechtheiten und guter Lichtechtheit.

Färbebeispiel C

20 Teile des Farbstoffes aus Beispiel 5a werden mit 80 Teilen Dextrin in einer Kugelmühle während 48 Stunden vermischt. Ein Teil des so erhaltenen Präparates wird mit einem Teil einer wäßrigen 40%igen Essigsäure angeteigt, der Brei mit 200 Teilen Wasser übergossen und kurz aufgekocht. — Zur Bereitung eines Färbebades verdünnt man diese Farbstofflösung mit 7000 Teilen Wasser, setzt 21 Teile wasserfreies Natriumsulfat, 14 Teile Ammoniumsulfat, 14 Teile Ameisensäure und 15 Teile eines Carriers auf der Basis von Umsetzungsprodukten von Äthylenoxid mit Dichlorphenolen zu und puffert die Flotte mit einer sauren wäßrigen Pufferlösung (beispielsweise Essigsäure/Natriumacetat) auf einen pH-Wert von 6 ab, erwärmt dieses Färbebad auf 50°C und gibt 100 Teile eines Gewebes aus Polyamid, das durch anionische Gruppen modifiziert ist, hinzu (das Flottenverhältnis beträgt nunmehr etwa 1 : 75 bis 1 : 80). Das Bad wird innerhalb von 45 Minuten auf 98°C erwärmt, die Färbung eine Stunde lang bei Kochtemperatur weitergeführt, das gefärbte Material herausgenommen und gründlich unter fließendem Wasser von 70 bis 80°C und anschließend unter kaltem Wasser gespült. Zur Trocknung kann das Gewebe zentrifugiert und anschließend gebügelt werden. Man erhält eine grünstichig gelbe Färbung mit guten Echtheiten.

Färbebeispiel D

Zu 100 Teilen einer 28%igen Lösung eines Polymers aus 94% Acrylnitril, 5% Acrylsäuremethylester und 1% Natriummethallyl-sulfonat in Dimethylformamid werden 2,8 Teile einer 5%igen Lösung des Farbstoffes von Beispiel 5b in Dimethylformamid gegeben. Die erhaltene gelb gefärbte Spinnlösung wird durch kurzes Umrühren homogenisiert und auf 80°C erwärmt. Nun wird unter Verwendung einer 100-Loch-Spinndüse mit einem Lochdurchmesser von 80 µm in ein Koagulationsbad von 50°C, welches aus 50 Vol.-% Dimethylformamid und 50 Vol.-% Wasser besteht, gesponnen. In der nachfolgenden Passage durch ein Streckbad von 80°C aus 30 Vol.-% Dimethylformamid und 70 Vol.-% Wasser werden die erhaltenen Fäden verstreckt, sodann durch ein Waschbad von 90 bis 95°C heißem Wasser geführt und darin gewaschen.

Es werden sehr farbstarke, gelb gefärbte Fäden mit hohem Glanz und außerordentlich guter Wasser-, Wasch-, Schweiß-, Trockenreib- und Naßreibechtheit und sehr guter Lichtechtheit erhalten.

Die Koagulations-, Streck- und Waschbäder werden nur sehr geringfügig angeblutet.

Färbebeispiel E

Zu 107 Teilen einer 28%igen Lösung eines Polymers aus 95% Acrylnitril, 4,5% Acrylsäuremethylester und 0,5% Natriummethallylsulfonat in Dimethylformamid rührt man 0,3 Teile einer 5%igen Lösung des Farbstoffes von Beispiel 22 in Dimethylformamid. Nach kurzem Umrühren erhält man eine vollkommen homogene Spinnlösung, die entsprechend den Angaben des Färbebeispiels D versponnen, verstreckt und gewaschen wird. Man erhält eine gelbe Färbung mit sehr guten Echtheitseigenschaften. Die Koagulations-, Streck- und Waschbäder werden kaum merklich angeblutet.

Färbebeispiel F

Zu 100 Teilen einer 28%igen Lösung eines Polymers aus 85% Acrylnitril, 13% Vinylchlorid und 2% Natrium-methallylsulfonat in Dimethylformamid werden 5 Teile einer 10%igen Lösung des Farbstoffes von Beispiel 6 in Dimethylformamid gegeben. Die erhaltene gelb gefärbte Spinnlösung wird

homogenisiert und auf 40°C erwärmt. Sie wird in ein Koagulationsbad aus 60 Vol.-% Dimethylformamid und 40 Vol.-% Wasser versponnen, in einem Streckbad aus 50 Vol.-% Dimethylformamid und 50 Vol.-% Wasser verstreckt und anschließend in 80 bis 85°C heißem Wasser gewaschen. Man erhält glänzende, goldgelb gefärbte Fäden mit hervorragenden Echtheiten; in den Bädern blutet der Farbstoff nur sehr geringfügig aus.

Färbebeispiel G

Zu 100 Teilen einer 26%igen Lösung eines Polymers aus 85% Acrylnitril, 14,5% Vinylacetat, 0,5% Natrium-methallylsulfonat in Dimethylacetamid von 70 bis 80°C rührt man 1,3 Teile einer 10%igen Lösung des Farbstoffes von Beispiel 5b in Dimethylacetamid ein, wobei nach kurzem Umrühren eine völlig homogene Spinnlösung entsteht. Unter Verwendung einer 100-Loch-Spinndüse mit einem Lochdurchmesser von 100 µm wird die Spinnlösung in ein Koagulationsbad von 80°C aus 70 Vol.-% Dimethylacetamid und 30 Vol.-% Wasser versponnen, danach in einem Streckbad von 80°C aus 70 Vol.-% Dimethylacetamid und 30 Vol.-% Wasser verstreckt und in einem 85 bis 90°C heißen Waschbad aus 5 Vol.-% Dimethylacetamid und 95 Vol.-% Wasser gewaschen. Man erhält glänzende, gelb gefärbte Fäden, die sehr hohe Echtheiten aufweisen. In den Bädern blutet der Farbstoff nur sehr geringfügig aus.

Färbebeispiel H

5 Teile einer 5%igen Lösung des Farbstoffes von Beispiel 5b in Dimethylformamid werden durch kurzes Umrühren mit einer 25%igen Lösung eines Polymers aus 59% Acrylnitril, 40% Vinylidenchlorid und 1% Natrium-methallylsulfonat homogen vermischt. Die erhaltene Spinnmasse wird auf 50°C erwärmt und in ein Koagulationsbad von 50°C aus 65 Vol.-% Dimethylformamid und 35 Vol.-% Wasser versponnen, anschließend in einem Bad aus 35 Vol.-% Dimethylformamid und 65 Vol.-% Wasser mit einer Temperatur von 80 bis 85°C verstreckt und in Wasser von 90 bis 95°C gewaschen. Man erhält gelb gefärbte Fäden mit hohem Glanz, die in den Bädern kaum ausbluten.

Färbebeispiel J

Zu 100 Teilen einer 18%igen Lösung eines in Beispiel D beschriebenen Polymers in Äthylencarbonat von 80 bis 90°C werden 0,36 Teile des Farbstoffes von Beispiel 4 gegeben. Nach gutem Durchrühren wird die homogene Spinnmasse nach dem Naßspinnverfahren versponnen, wobei ein 80°C heißes Koagulationsbad aus 50 Vol.-% Äthylencarbonat und 50 Vol.-% Wasser verwendet wird; anschließend wird in einem Bad von 80°C aus 30 Vol.-% Äthylencarbonat und 70 Vol.-% Wasser verstreckt und in einem Bad aus 5 Vol.-% Äthylencarbonat und 95 Vol.-% Wasser bei einer Temperatur von 70 bis 80°C gewaschen. Man erhält sehr stark gelb-farbige Fäden mit ausgezeichnetem Glanz und sehr hohen Naß- und Reibechtheiten. Die Ausblutung in den Bädern ist nur sehr gering.

Färbebeispiel K

Zu 100 Teilen einer 23%igen Lösung des in Beispiel D beschriebenen Polymers in Dimethylsulfoxid gibt man 0,1 Teile des Farbstoffes von Beispiel 23, der sich unter Rühren zu einer homogenen gelben Spinnlösung löst. Diese Lösung wird nach dem Naßspinnverfahren versponnen, wobei für die Koagulation ein Bad von 30°C aus 55 Vol.-% Dimethylsulfoxid und 45 Vol.-% Wasser verwendet wird; die Fäden werden anschließend in einem Bad von 30°C aus 40 Vol.-% Dimethylsulfoxid und 60 Vol.-% Wasser verstreckt und in 80°C heißem Wasser gewaschen. Man erhält gelbgefärbte Fäden mit sehr hohem Glanz und sehr guten Echtheitseigenschaften; die Koagulations-, Streck- und Waschbäder sind nur sehr geringfügig angefärbt.

Färbebeispiel L

Zu einer Lösung aus 54 Teilen des in Beispiel D beschriebenen Polymers und 156 Teilen einer 48%igen wäßrigen Natriumrhodanid-Lösung von 20°C gibt man 0,5 Teile des Farbstoffes von Beispiel 13. Das Ganze wird durch Umrühren homogenisiert, und man erhält eine vollkommen klare Spinnlösung, die in eine 10%ige wäßrige Natriumrhodanid-Lösung als Koagulationsbad mit einer Temperatur von 20°C versponnen wird; anschließend wird der Faden in einer 8%igen wäßrigen Natriumrhodanid-Lösung von 40 bis 45°C verstreckt und in Wasser von 70 bis 80°C gewaschen. Man erhält glänzende, gelb-farbige Fäden mit sehr hohen Reib- und Naßechtheiten. Die Koagulations-,

Streck- und Waschbäder werden nur unwesentlich angeblutet.

Beispiel 25

36 Teile 2-(4'-Aminophenoxy)-1-N,N-(dimethylamino)-äthan werden in 210 Teilen Wasser und 60 Volumenteilen einer wäßrigen 30%igen Salzsäure gelöst. Dann trägt man in 30 Minuten 41 Teile 1,3,3-Trimethylindolin-2-methylenaldehyd bei Zimmertemperatur ein und rührt etwa 3 bis 4 Stunden nach. Die klare Lösung wird von einer geringen Menge eines unlöslichen Rückstandes abfiltriert und sodann tropfenweise im Verlauf von etwa 30 Minuten in 200 Volumenteile einer wäßrigen 5 n-Natronlauge gegeben. Es scheidet sich zunächst ein gelbliches Öl, das beim weiteren Rühren bei Zimmertemperatur kristallin erstarrt. Man saugt danach ab, wäscht mit Wasser neutral und salzfrei und trocknet das Produkt bei 40° C. Man erhält 71 Teile gelblicher Kristalle, die nach dem Umlösen aus Benzin von einem Siedepunkt von 80—100° C einen Schmelzpunkt von 97° C zeigen. Diese Verbindung stellt die Anhydrobase der Verbindung des Beispiels 5b dar und besitzt die folgende Konstitution:

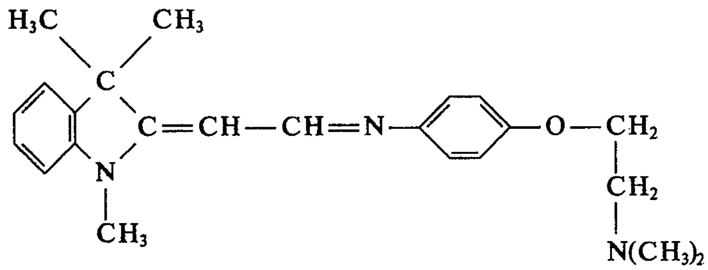

die bezüglich der chemischen Zusammensetzungen durch die C,H,N,O-Analyse bestätigt wurde.

18 Teile dieser salzfrei gewaschenen und getrockneten Anhydroverbindung werden in 100 Teilen Dimethylformamid gelöst; 6 Teile Essigsäure werden hinzugegeben, und die so erhaltene gelbe Lösung des Farbstoffdiazetats der Formel

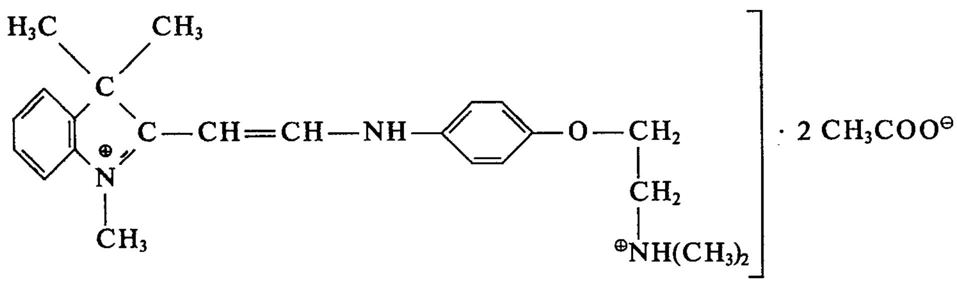

wird zum Spinnfärben, beispielsweise analog dem Färbebeispiel D, verwendet. Man erhält hierbei intensiv gelb gefärbte Fasern, die in ihren Echtheitseigenschaften den mit dem Farbstoff von Beispiel 5b erhaltenen Färbungen entsprechen. Die Fäll-, Streck- und Waschbäder werden nur äußerst gering angeblutet.

Ähnliche gute Ergebnisse erhält man, wenn man Dimethylacetamid als Lösungsmittel verwendet und beispielsweise nach dem Färbebeispiel G verfährt.

Färbebeispiel M

In ähnlicher oder gleicher Weise, wie in den obigen Färbebeispielen beschrieben, können auch die anderen erfindungsgemäßen Verbindungen (Farbstoffe) zum Färben der Materialien mit gleich gutem Erfolg eingesetzt werden.

**Patentansprüche**

1. Azamethinverbindungen der allgemeinen Formel (1)

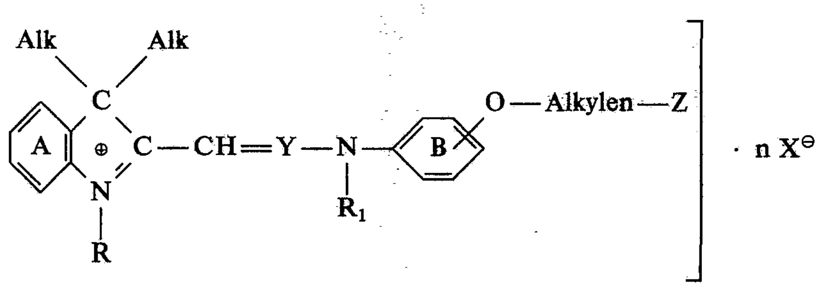 (1)

in welcher bedeuten:

R ist eine Alkylgruppe von 1 bis 4 C-Atomen, die substituiert sein kann, beispielsweise durch eine Carbamoylgruppe ($-CONH_2$), eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;
Alk ist eine Alkylgruppe von 1 bis 4 C-Atomen, wobei beide gleich oder verschieden voneinander sein können;
Y ist der Methinrest (CH) oder ein Stickstoffatom;
$R_1$ ist ein Wasserstoffatom oder eine Alkylgruppe von 1 bis 4 C-Atomen, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe;
Alkylen ist eine geradkettige oder verzweigte Alkylengruppe von 2 bis 6 C-Atomen;
Z ist eine Gruppe der Formel (2a) oder (2b)

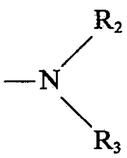 (2a) 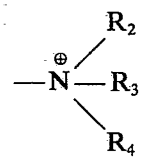 (2b)

in welchen

$R_2$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyangruppe oder Phenylgruppe,
$R_3$ eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe, oder der Phenylrest ist, der durch 1 oder 2 Substituenten aus der Gruppe Chlor, Alkyl von 1 bis 4 C-Atomen, Alkoxy von 1 bis 4 C-Atomen, Nitro, Carbalkoxy mit 1 bis 4 C-Atomen im Alkylrest und Carbamoyl substituiert sein kann, und
$R_4$ ein Wasserstoffatom oder eine Alkylgruppe von 1 bis 4 C-Atomen ist, die substituiert sein kann, beispielsweise durch eine Carbamoylgruppe, eine Alkanoyloxygruppe von 1 bis 4 C-Atomen, eine Carbalkoxygruppe mit 1 bis 4 C-Atomen im Alkylrest, eine Hydroxy-, Cyan- oder Phenylgruppe,

oder in welchen

$R_2$ und $R_3$ zusammen mit dem Stickstoffatom einen fünf-, sechs- oder siebengliedrigen heterocyclischen Rest bilden, der noch als weiteres Heteroatom ein Stickstoff-, Sauerstoff- oder Schwefelatom enthalten kann, oder
$R_2$ und $R_3$ oder $R_2$, $R_3$ und $R_4$ zusammen mit dem positiv geladenen Stickstoffatom einen fünf-, sechs- oder siebengliedrigen heterocyclischen Rest bilden, der noch als weiteres Heteroatom ein Stickstoff-, Sauerstoff- oder Schwefelatom enthalten kann, wobei $R_4$ entweder Teil des heterocyclischen Restes oder ein Wasserstoffatom oder die genannte Alkylgruppe sein kann;
der Benzolkern A kann durch 1 oder 2 Substituenten aus der Gruppe Halogen, Nitro, Cyan, Sulfamoyl, Alkyl von 1 bis 4 C-Atomen, Alkoxy von 1 bis 4 C-Atomen und Carbalkoxy mit 1 bis 4 C-Atomen im Alkylrest substituiert sein;
der Benzolkern B kann durch 1 oder 2 Substituenten aus der Gruppe Halogen, Nitro, Alkyl von 1 bis 4 C-Atomen, Alkoxy von 1 bis 4 C-Atomen und Carbalkoxy mit 1 bis 4 C-Atomen im Alkylrest substituiert sein;
n ist die Zahl 1 oder 2;
$X^{(-)}$ ist das Äquivalent eines farblosen Anions.

2. Verbindungen der allgemeinen Formel (1A)

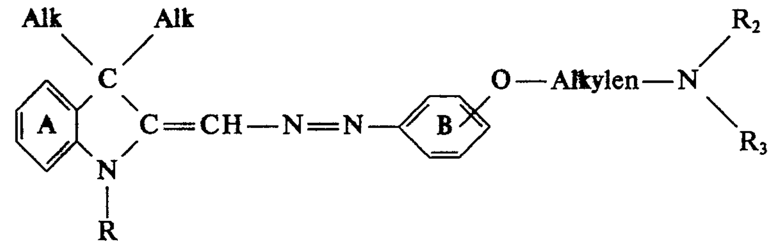

(1 A)

in welchen R, Alk, Alkylen, $R_2$ und $R_3$ und die Benzolkerne A und B die in Anspruch 1 genannten Bedeutungen haben, und deren Salze mit organischen oder anorganischen Säuren.

3. Quartäre Azamethinverbindungen nach Anspruch 1 der allgemeinen Formeln

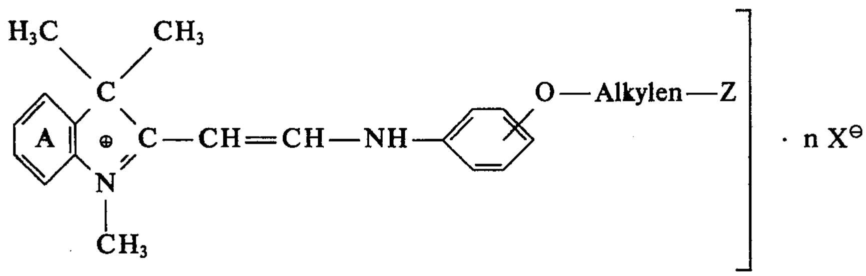

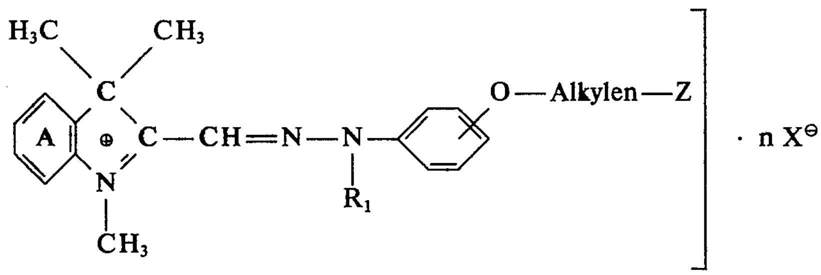

in welchen der Benzolkern A durch Substituenten aus der Gruppe Halogen, Methyl, Methoxy und Carbalkoxy mit 1 bis 4 C-Atomen im Alkylrest substituiert sein kann, Z eine Dialkylamino-, eine Dialkylammonium- oder eine Trialkylammoniumgruppe mit jeweils 1 bis 4 C-Atomen in den Alkylresten bedeutet, $R_1$ eine Methyl- oder Äthylgruppe darstellt, n entweder die Zahl 1 oder die Zahl 2 bedeutet und $X^{(-)}$ und Alkylen die in Anspruch 1 genannten Bedeutungen besitzen.

4. Verfahren zur Herstellung der Verbindungen der allgemeinen Formel (1) von Anspruch 1, in welchen der Formelrest Y für den Methinrest steht, dadurch gekennzeichnet, daß man eine Aldehydverbindung der allgemeinen Formel (3)

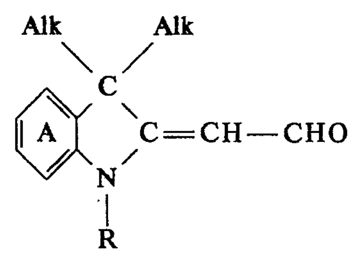

(3)

in welcher R, Alk und A die in Anspruch 1 genannten Bedeutungen haben, mit einem Amin der allgemeinen Formel (4)

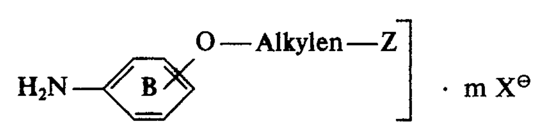

(4)

in welcher Alkylen, B, Z und $X^{(-)}$ die in Anspruch 1 genannten Bedeutungen haben und m für die Zahl Null oder 1 steht, in Gegenwart einer Säure, die das Anionäquivalent $X^{(-)}$ enthält, umsetzt oder daß man eine 2-Methylenindolin-Verbindung der allgemeinen Formel (5)

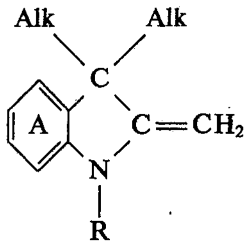

(5)

in welcher A, R und Alk die in Anspruch 1 genannten Bedeutungen haben, mit einer N-Formylverbindung der allgemeinen Formel (6)

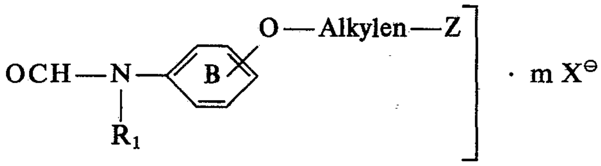

(6)

in welcher Alkylen, B, $R_1$, Z und $X^{(-)}$ die in Anspruch 1 genannten Bedeutungen haben und m die Zahl Null oder 1 ist, in Gegenwart einer Säure, die das Anionäquivalent $X^{(-)}$ enthält, umsetzt.

5. Verfahren zur Herstellung der Verbindungen der allgemeinen Formel (1) von Anspruch 1, in denen der Formelrest Y für ein Stickstoffatom steht, dadurch gekennzeichnet, daß man eine 2-Methylen-indolin-Verbindung der in Anspruch 4 genannten und definierten allgemeinen Formel (5) mit einer Diazoniumverbindung der allgemeinen Formel (8)

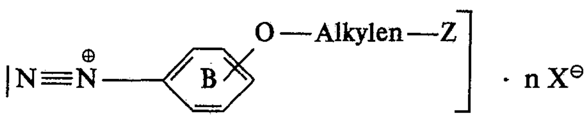

(8)

in welcher B, Alkylen, Z, n und $X^{\ominus}$ die in Anspruch 1 genannten Bedeutungen haben, kuppelt und die erhaltene Verbindung der allgemeinen Formel (9)

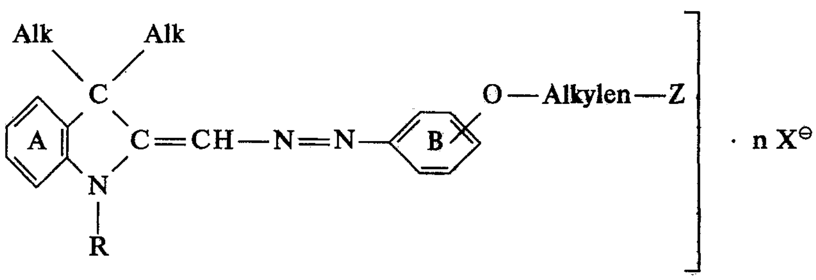

(9)

in welcher A, B, R, Alk, Alkylen, Z, n und $X^{(-)}$ die in Anspruch 1 genannten Bedeutungen haben, mit einem Alkylierungsmittel, das eine gegebenenfalls substituierte Alkylgruppe $R_1$ (bzw. $R_4$) enthält, umsetzt

oder indem man, falls die Formelreste R und $R_1$ gleiche Bedeutungen haben, eine Diazoniumverbindung der obengenannten und definierten Formel (8) mit einer Indoleninverbindung der allgemeinen Formel (10)

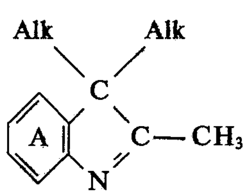

(10)

in welcher A und Alk die in Anspruch 1 genannten Bedeutungen haben, kuppelt und die erhaltene Hydrazonverbindung der allgemeinen Formel (11)

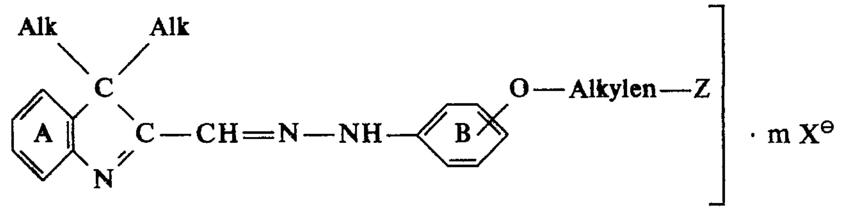

(11)

in welcher A, B, Alk, Alkylen, Z und $X^{(-)}$ die in Anspruch 1 genannten Bedeutungen haben und m 0 oder 1 ist mit der 2molaren Menge, — falls Z in Formel (1) ein Rest der Formel (2b) und in Formel (11) ein Rest der Formel (2a) ist, mit der 3molaren Menge —, an einem Alkylierungsmittel, das die gegebenenfalls substituierte Alkylgruppe R (bzw. $R_1$ bzw. $R_4$) enthält, umsetzt.

6. Verfahren zur Herstellung der in Anspruch 2 genannten und definierten basischen Azamethinverbindungen der allgemeinen Formel (1A), dadurch gekennzeichnet, daß man eine 2-Methylen-indolin-Verbindung der in Anspruch 4 genannten und definierten allgemeinen Formel (5) mit einer Diazoniumverbindung der in Anspruch 5 genannten und definierten allgemeinen Formel (8) kuppelt und das erhaltene Produkt durch Umsetzung mit einer basischen Verbindung in die basische Azamethinverbindung der allgemeinen Formel (1A) überführt.

7. Verwendung der in den Ansprüchen 1, 2 oder 3 genannten und definierten Azamethinverbindungen als Farbmittel.

8. Verwendung nach Anspruch 7 zum Färben von Materialien aus Leder, tannierter Baumwolle, ligninhaltigen Fasern, sauermodifiziertem Polyacrylnitril und dessen Mischpolymerisaten, von sauermodifizierten aromatischen Polyestern oder von sauermodifizierten Polyamiden.

9. Verwendung nach Anspruch 7 als Farbstoffe für Schreibflüssigkeiten, Stempelfarben und Kugelschreiberpasten oder im Gummidruck.

10. Verwendung der quartären Azamethinverbindungen der allgemeinen Formel (1) von Anspruch 1 gemäß Anspruch 7 in der Spinnfärbung von sauermodifiziertem Polyacrylnitril.

11. Verbindungen aus den Azamethinverbindungen von Anspruch 1, 2 oder 3 mit anionischen Fällungsmitteln.

12. Verwendung der Verbindungen von Anspruch 11 als Pigmente.

13. Verwendung nach Anspruch 12 im Papierdruck.

## Claims

1. Azamethine compounds of the general formula (1)

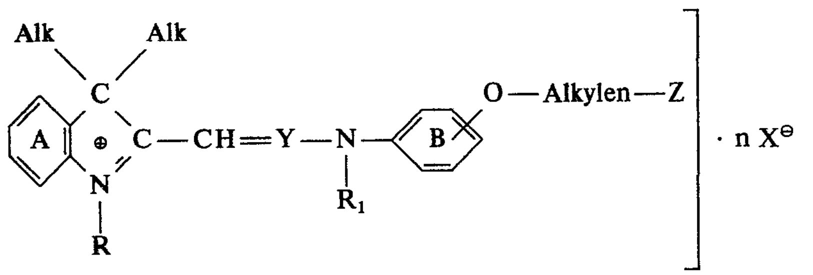

(1)

in which

R is an alkyl group of from 1 to 4 C-atoms which can be substituted, for example by a carbamoyl group ($-CONH_2$), an alkanoyloxy group of from 1 to 4 C-atoms, a carbalkoxy group of from 1 to 4 C-atoms in the alkyl moiety, a hydroxy, cyano or phenyl group;
Alk is an alkyl group of from 1 to 4 C-atoms, both being identical or different from one another;
Y is the methine radical (CH) or nitrogen atom;
$R_1$ is a hydrogen atom or an alkyl group of from 1 to 4 C-atoms which can be substituted, for example by a carbamoyl group, an alkanoyloxy group of from 1 to 4 C-atoms, a carbalkoxy group of from 1 to 4 C-atoms in the alkyl moiety, a hydroxy, cyano or phenyl group,
Alkylen is a straight-chain or branched alkylene group of from 2 to 6 C-atoms;
Z is a group of the formula (2a) or (2b)

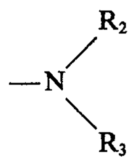 (2a) 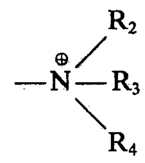 (2b)

in which

$R_2$ is an alkyl group of from 1 to 4 C-atoms which can be substituted, for example by a carbamoyl group, an alkanoyloxy group of from 1 to 4 C-atoms, a carbalkoxy group with 1 to 4 C-atoms in the alkyl moiety, a hydroxy, cyano or phenyl group,

$R_3$ is an alkyl group of from 1 to 4 C-atoms which can be substituted, for example by a carbamoyl group, an alkanoyloxy group of 1 to 4 C-atoms, a carbalkoxy group with 1 to 4 C-atoms in the alkyl moiety, a hydroxy, cyano or phenyl group, or is the phenyl radical which can be substituted by 1 or 2 substituents from the group of chlorine, alkyl of from 1 to 4 C-atoms, alkoxy of from 1 to 4 C-atoms, nitro, carbalkoxy with 1 to 4 C-atoms in the alkyl moiety and carbamoyl, and

$R_4$ is a hydrogen atom or an alkyl group of from 1 to 4 C-atoms which can be substituted, for example by a carbamoyl group, an alkanoyloxy group of from 1 to 4 C-atoms, a carbalkoxy group with 1 to 4 C-atoms in the alkyl moiety, a hydroxy, cyano or phenyl group, or in which

$R_2$ and $R_3$, together with the nitrogen atom, form a five-membered, six-membered or seven-membered heterocyclic radical which can contain, as an additional hetero-atom, a nitrogen, oxygen and sulfur atom, or

$R_2$ and $R_3$ or $R_2$, $R_3$ and $R_4$, together with the positively charged nitrogen, form a five-membered, six-membered or seven-membered heterocyclic radical which can contain, as an additional heteroatom, a nitrogen, oxygen and sulfur atom, $R_4$ being either a part of the heterocyclic radical or a hydrogen atom or the mentioned alkyl group;

the benzene nucleus A can be substituted by 1 or 2 substituents from the group of halogen, nitro, cyano, sulfamoyl, alkyl of from 1 to 4 C-atoms, alkoxy of from 1 to 4 C-atoms and carbalkoxy with 1 to 4 C-atoms in the alkyl radical;

the benzene nucleus B can be substituted by 1 or 2 substituents from the group of halogen, nitro, alkyl of from 1 to 4 C-atoms, alkoxy of from 1 to 4 C-atoms and carbalkoxy with 1 to 4 C-atoms in the alkyl radical;

n is the number 1 or 2;

$X^{(-)}$ is the equivalent of a colorless anion.

2. Compounds of the general formula (1A)

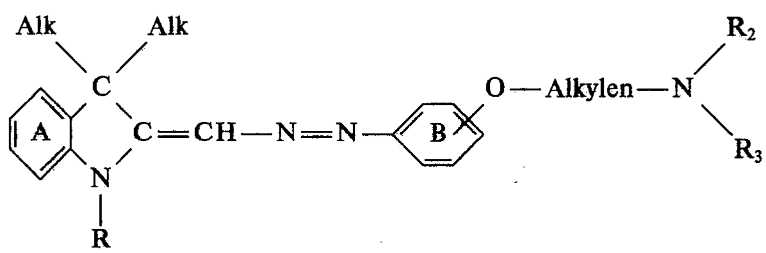

(1 A)

in which R, Alk, Alkylen, $R_2$ and $R_3$ and the benzene nuclei A and B have the meanings mentioned in Claim 1, and their salts with organic or inorganic acids.

3. Quaternary azamethine compounds according to Claim 1 of the general formulae

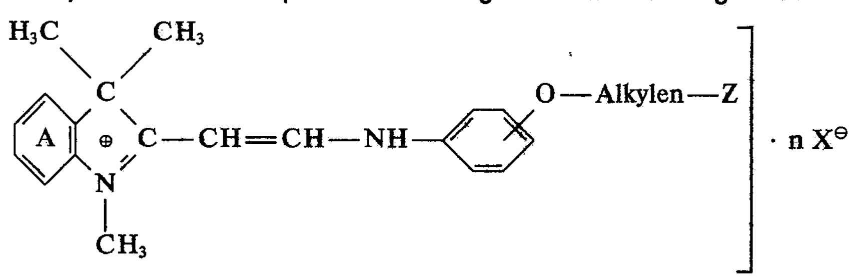

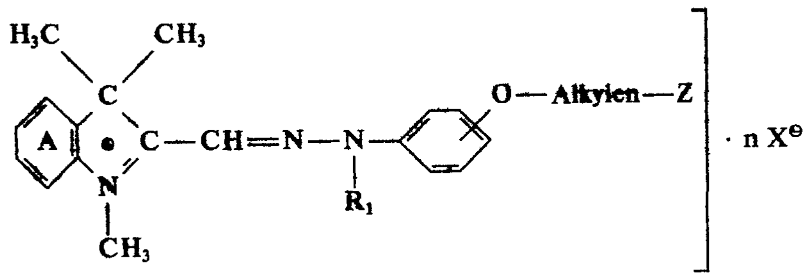

in which the benzene nucleus A can be substituted by substituents from the group of halogen, methyl, methoxy and carbalkoxy with 1 to 4 C-atoms in the alkyl moiety, Z is a dialkylamino, dialkylammonium or trialkylammonium group with 1 to 4 C-atoms in the alkyl radicals, $R_1$ is a methyl or ethyl group, n is the number 1 or 2, and $X^{(-)}$ and Alkylen have the meanings mentioned in Claim 1.

4. A process for the preparation of the compounds of the general formula (1) of Claim 1, in which the formula member Y is the methine radical, characterized by that an aldehyde compound of the general formula (3)

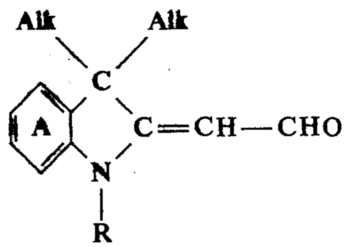

(3)

in which R, Alk and A have the meanings mentioned in Claim 1, is reacted with an amine of the general formula (4)

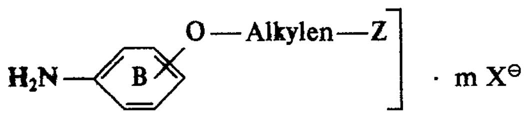

(4)

in which Alkylen, B, Z and $X^{\ominus}$ have the meanings mentioned in Claim 1 and m is zero or 1, in the presence of an acid which contains the anion equivalent $X^{\ominus}$, or that a 2-methyleneindoline compound of the general formula (5)

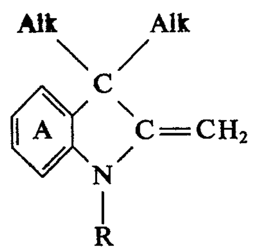

(5)

in which A, R and Alk have the meanings mentioned in Claim 1, is reacted with a N-formyl compound of the general formula (6)

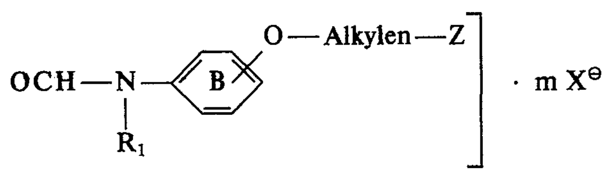

(6)

in which Alkylen, B, $R_1$, Z and $X^{(-)}$ have the meanings mentioned in Claim 1 and m is zero or 1, in the presence of an acid which contains the anion equivalent $X^{(-)}$.

5. A process for the preparation of the compounds of the general formula (1) of Claim 1, in which the formula member Y is a nitrogen atom, characterized by that a 2-methylene-indoline compound of the general formula (5) mentioned and defined in Claim 4, is coupled with a diazonium compound of the general formula (8)

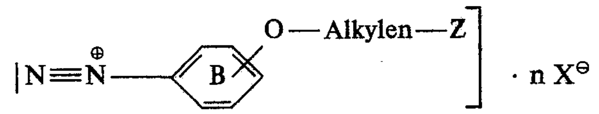
(8)

in which B, Alkylen, Z, n and $X^{\ominus}$ have the meanings mentioned in Claim 1, and that the compound obtained of the general formula (9)

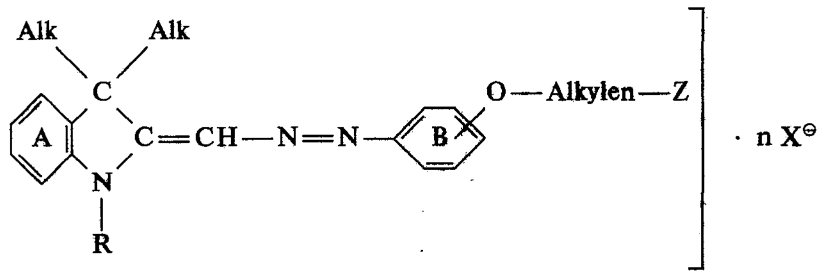
(9)

in which A, B, R, Alk, Alkylen, Z, n and $X^{(-)}$ have the meanings mentioned in Claim 1, is reacted with an alkylating agent which contains an optionally substituted alkyl group $R_1$ (or $R_4$), or that a diazonium compound of the above-mentioned and above-defined formula (8), if the formula radicals R and $R_1$ have the same meanings, is coupled with an indolenine compound of the general formula (10)

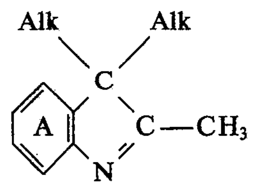
(10)

in which A and Alk have the meanings mentioned in Claim 1, and that the resulting hydrazone compound of the general formula (11)

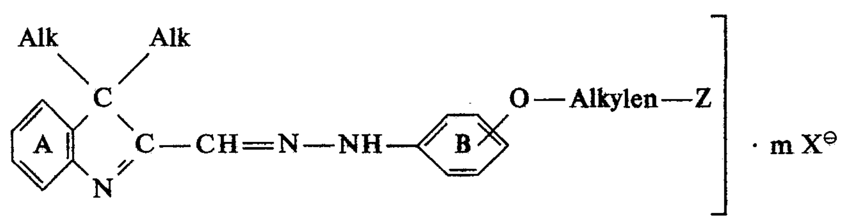
(11)

in which A, B, Alk, Alkylen, Z and $X^{(-)}$ have the meanings mentioned in Claim 1 and m is 0 or 1, is reacted with twice the molar amount — or, if Z is a radical of the formula (2b) in formula (1) and is a radical of the formula (2a) in formula (11), with 3-times the molar amount — of an alkylating agent which contains the optionally substituted alkyl group R (or $R_1$ or $R_4$).

6. A process for the preparation of the basic azamethine compounds of the general formula (1A) mentioned and defined in Claim 2, characterized by that a 2-methylene-indoline compound of the general formula (5) mentioned and defined in Claim 4, is coupled with a diazonium compound of the general formula (8) mentioned and defined in Claim 5, and that the product obtained is converted into the basic azamethine compound of the general formula (1A) by reaction with a basic compound.

7. Use of the azamethine compounds mentioned and defined in Claims 1, 2 or 3, as colorants.

8. Use according to Claim 7 for the coloring of materials made from leather, tannin-treated cotton, lignin-containing fibres, acid-modified polyacrylonitrile and its copolymers, from acid-modified aromatic polyesters or from acid-modified polyamides.

9. Use according to Claim 7 as dyestuffs for writing fluids, rubber-stamp inks and ball-point pen pastes, or in the flexographic printing.

10. Use of the quaternary azamethine compound of the general formula (1) of Claim 1 according to Claim 7 in the spin-dyeing of acid-modified polyacrylonitrile.

11. Compounds made from the azamethine compounds of Claim 1, 2 or 3 with anionic precipitating agents.

12. Use of the compounds of Claim 11 as pigments.

13. Use according to Claim 12 in the paper-printing.

**Revendications**

1. Composés azaméthiniques répondant à la formule générale (1)

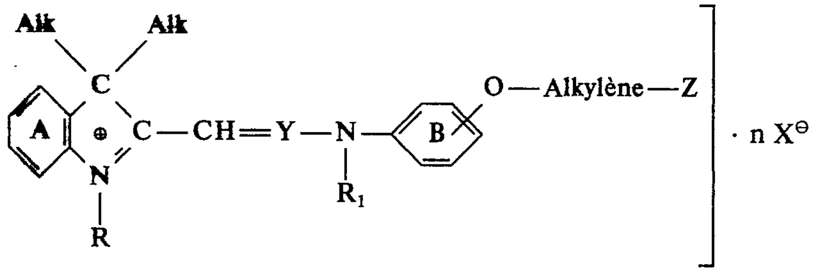 (1)

dans laquelle:

R représente un radical alkyle contenant de 1 à 4 atomes de carbone et pouvant être substitué, portant par exemple un radical carbamoyle ($-CONH_2$), un radical alcanoyloxy en $C_1-C_4$, un radical alcoxycarbonyle dont la partie alkyle contient de 1 à 4 atomes de carbone, ou un radical hydroxy, cyano ou phényle,

Alk représente un radical alkyle contenant de 1 à 4 atomes de carbone, les deux radicaux alk étant identiques ou différents l'un de l'autre,

Y représente le radical méthine (CH) ou un atome d'azote,

$R_1$ représente un atome d'hydrogène ou un radical alkyle en $C_1-C_4$ éventuellement substitué, par exemple porteur d'un radical carbamoyle, d'un radical alcanoyloxy contenant de 1 à 4 atomes de carbone, d'un radical alcoxycarbonyle dont la partie alkyle contient de 1 à 4 atomes de carbone, ou d'un radical hydroxy, cyano ou phényle,

Alkylène représente un radical alkylène linéaire ou ramifié qui contient de 2 à 6 atomes de carbone,

Z représente un radical répondant à l'une des formules (2a) et (2b):

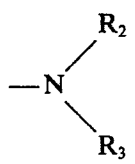 (2a)

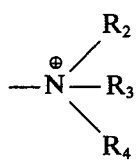 (2b)

dans lesquelles:

$R_2$ représente un radical alkyle contenant de 1à 4 atomes de carbone et éventuellement substitué, par exemple porteur d'un radical carbamoyle, d'un radical alcanoyloxy en $C_1-C_4$, d'un radical alcoxycarbonyle contenant de 1 à 4 atomes de carbone dans sa partie alkyle, ou d'un radical hydroxy, cyano ou phényle,

$R_3$ représente un radical alkyle contenant de 1 à 4 atomes de carbone et éventuellement substitué, par exemple porteur d'un radical carbamoyle, d'un radical alcanoyloxy en $C_1-C_4$, d'un radical alcoxycarbonyle dont la partie alkyle contient de 1 à 4 atomes de carbone, ou d'un radical hydroxy, cyano ou phényle, ou représente un radical phényle éventuellement porteur d'un ou deux substituants pris dans l'ensemble constitué par le chlore, les alkyles en $C_1-C_4$, les alcoxy en $C_1-C_4$, le radical nitro, les alcoxycarbonyles contenant de 1 à 4 atomes de carbone dans leur partie alkyle et le radical carbamoyle, et

$R_4$ représente un atome d'hydrogène ou un radical alkyle contenant de 1 à 4 atomes de carbone et éventuellement substitué, par exemple porteur d'un radical carbamoyle, d'un radical alcanoyloxy en $C_1-C_4$, d'un radical alcoxycarbonyle dont la partie alkyle contient de 1 à 4 atomes de carbone, ou d'un radical hydroxy, cyano ou phényle,

ou dans lesquelles:

$R_2$ et $R_3$ forment ensemble et avec l'atome d'azote un radical hétérocyclique à cinq, six ou sept maillons qui peut contenir, comme hétéroatome supplémentaire, un atome d'azote, d'oxygène ou de soufre,

$R_2$ et $R_3$, ou $R_2$, $R_3$ et $R_4$, forment ensemble et avec l'atome d'azote chargé positivement un radical hétérocyclique à cinq, six ou sept maillons qui peut contenir, comme hétéroatome supplémentaire un atome d'azote, d'oxygène ou de soufre, $R_4$ pouvant alors soit faire partie du radical hétérocyclique soit être un atome d'hydrogène ou le radical alkyle mentionné,

le noyau benzénique A peut porter un ou deux substituants pris dans l'ensemble constitué par les halogènes, les radicaux nitro, cyano et sulfamoyle, les alkylesen $C_1-C_4$, les alcoxy en $C_1-C_4$, et les alcoxycarbonyles dont la partie alkyle contient de 1 à 4 atomes de carbone,
le noyau benzénique B peut porter un ou deux substituants pris dans l'ensemble constitué par les halogènes, le radical nitro, les alkyles en $C_1-C_4$, les alcoxy en $C_1-C_4$ et les alcoxycarbonyles dont la partie alkyle contient de 1 à 4 atomes de carbone,
n représente le nombre 1 ou le nombre 2 et
$X^{(-)}$ désigne l'équivalent d'un anion incolore.

2. Composés répondant à la formule générale

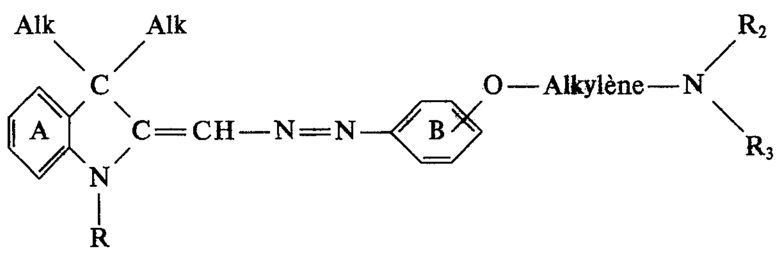

(1 A)

dans laquelle R, Alk, Alkylène, $R_2$ et $R_3$ ainsi que les noyaux benzéniques A et B ont les significations données à la revendication 1, et les sels qu'ils forment avec des acides minéraux ou organiques.

3. Composés azaméthiniques quaternaires selon la revendication 1 qui répondent à l'une des formules générales:

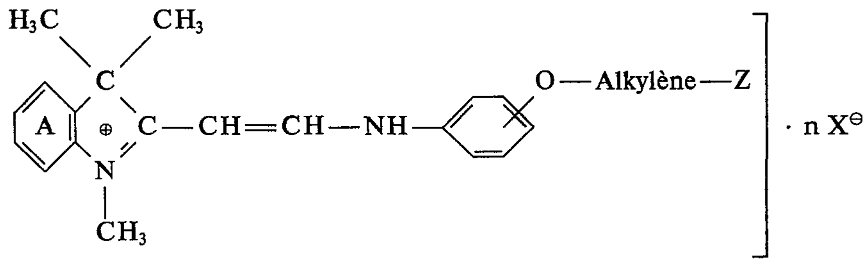

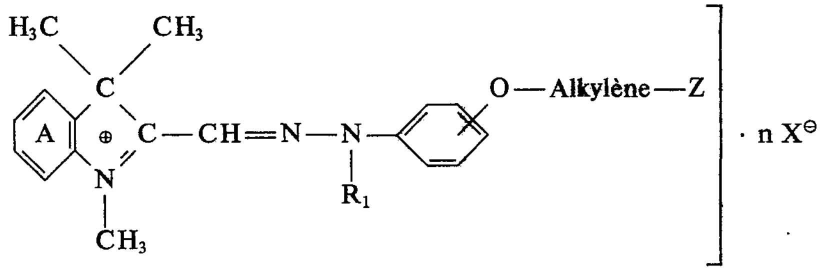

dans lesquelles le noyau benzénique A peut porter des substituants pris dans l'ensemble constitué par les halogènes, les radicaux méthyles et méthoxy et les radicaux alcoxycarbonyles dont la partie alkyle contient de 1 à 4 atomes de carbone, Z représente un radical dialkylamino, dialkylammonium ou trialkylammonium dont chacun des radicaux alkyles contient de 1 à 4 atomes de carbone, $R_1$ représente un radical méthyle ou éthyle, n est égal à 1 ou à 2, et $X^{(-)}$ et Alkylène ont les significations donnéses à la revendication 1.

4. Procédé de préparation des composés de formule générale (1) selon la revendication 1 dans lesquels Y représente le radical méthine, procédé caractérisé en ce que:
on fait réagir un aldéhyde répondant à la formule générale (3)

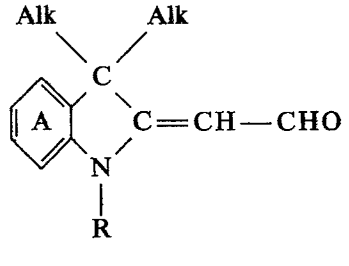

(3)

dans laquelle R, Alk et A ont les significations données à la revendication 1, avec une amine répondant à la formule générale (4):

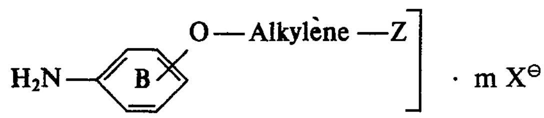

(4)

dans laquelle Alkylène, B, Z et X(−) ont les significations qui ont été données à la revendication 1 et m désigne le nombre 0 ou 1, en présence d'un acide contenant l'équivalent anionique X(−), ou on fait réagir une méthylène-2 indoline répondant à la formule générale (5):

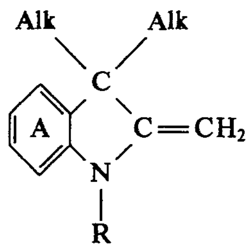

(5)

dans laquelle A, R et Alk ont les significations données à la revendication 1, avec un composé N-formylique répondant à la formule générale (6):

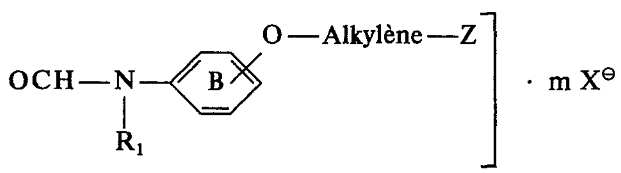

(6)

dans laquelle Alkylène, B, $R_1$, Z et X(−) ont les significations données à la revendication 1 et m représente le nombre 0 ou 1, en présence d'un acide contenant l'équivalent anionique X(−).

5. Procédé de préparation des composés de formule générale (1) selon la revendication 1, dans lesquels Y représente un atome d'azote, procédé caractérisé en ce que:
on copule une méthylène-2 indoline répondant à la formule générale (5) représentée et définie à la revendication 4 avec un composé de diazonium répondant à la formule générale (8):

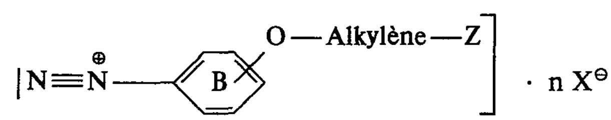

(8)

dans laquelle B, Alkylène, Z, n et $X^{\ominus}$ ont les significations données à la revendication 1, et on fait réagir le composé obtenu, qui répond à la formule générale (9)

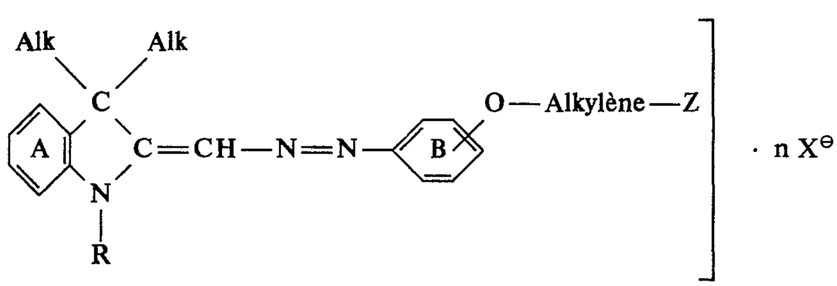

(9)

dans laquelle A, B, R, Alk, Alkylène, Z, n et X(−) ont les significations données à la revendication 1, avec un agent d'alkylation contenant un radical alkyle $R_1$ (ou $R_4$) éventuellement substitué,
ou, dans le cas où les radicaux R et $R_1$ ont les mêmes significations, on copule un composé de diazonium répondant à la formule (8) représentée et définie ci-dessus avec une indolénine répondant à la formule générale (10)

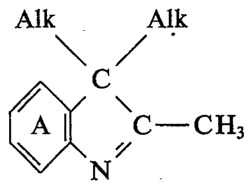

(10)

dans laquelle A et Alk ont les significations données à la revendication 1, et on fait réagir l'hydrazone ainsi obtenue qui répond à la formule générale (11)

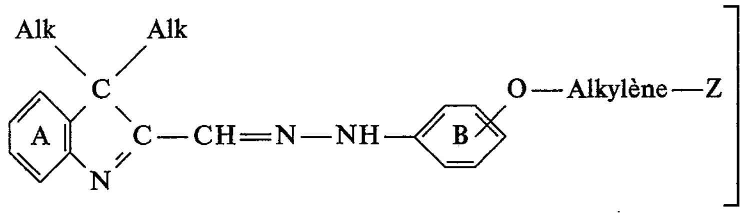

$\cdot m X^{\ominus}$ (11)

dans laquelle A, B, Alk, Alkylène, Z et $X^{(-)}$ ont les significations données à la revendication 1 et m est égal à 0 ou à 1, avec deux fois sa quantité molaire (ou trois fois sa quantité molaire lorsque Z, dans la formule 1, est un radical de formule 2b et, dans la formule 11, un radical de formule 2a) d'un agent alkylant contenant le radical alkyle R (ou $R_1$ ou $R_4$) éventuellement substitué.

6. Procédé de préparation des composés azaméthiniques basiques répondant à la formule générale (1A) qui a été représentée et définie à la revendication 2, procédé caractérisé en ce qu'on copule une méthylène-2 indoline répondant à la formule générale (5) qui a été représentée et définie à la revendication 4 avec un composé de diazonium répondant à la formule générale (8) qui a été représentée et définie à la revendication 5, et on transforme le produit obtenu, par réaction avec un composé basique, en le composé azaméthinique et basique de formule générale (1A).

7. Application des composés azaméthiniques mentionnés et définis dans l'une quelconque des revendications 1, 2 et 3 comme matières colorantes.

8. Application selon la revendication 7 selon laquelle on teint des matières en cuir, en coton tanné, en fibres contenant de la lignine, en polymères ou copolymères de l'acrylonitrile modifiés par des radicaux acides, en polyesters aromatiques modifiés par des radicaux acides ou en polyamides modifiés par des radicaux acides.

9. Application selon la revendication 7 comme colorant pour des encres d'écriture ou à tampons et pour des pâtes de crayons à billes, ou dans l'impression offset.

10. Application selon la revendication 7 des composés azaméthiniques quaternaires de formule générale (1) définis à la revendication 1 pour la teinture au filage du polyacrylonitrile modifié par des radicaux acides.

11. Composés formés à partir de composés azaméthiniques selon l'une quelconque des revendications 1, 2 et 3 et d'agents de précipitation anioniques.

12. Application des composés selon la revendication 11 comme pigments.

13. Application selon la revendication 12 dans l'impression du papier.